# EUROPEAN PATENT SPECIFICATION

(11) **EP 4 016 355 B1**
(45) Date of publication and mention of the grant of the patent: **17.04.2024**
(21) Application number: 22164424.8
(22) Date of filing: 25.03.2022
(51) Int. Cl.: G06Q 10/0635, G06Q 10/10, G06Q 30/0601, G06Q 30/01, G06Q 50/18, G06Q 50/26, H04M 3/22, G06F 21/62, G10L 25/63, H04M 3/51

(54) **ANONYMIZED SENSITIVE DATA ANALYSIS**
ANALYSE ANONYMISIERTER SENSITIVER DATEN
ANALYSE DES DONNEES SENSIBLES ANONYMISES

(43) Date of publication of application: 22.06.2022
(73) Proprietor: i2x GmbH, 10119 Berlin (DE)
(72) Inventor: Rogowski, Adrian, 12435 Berlin (DE); Brown, Samuel Frank Jet, 13357 Berlin (DE); Walther, Stefan, 86899 Landsberg (DE)
(74) Representative: Hoffmann Eitle

(56) References cited:
- US-A1- 2015 086 003
- US-A1- 2016 352 902
- US-A1- 2020 184 203
- US-B1- 11 250 876

## Description

The present invention relates to anonymization of sensitive data and to anonymized sensitive data analysis. In particular, the present invention relates to an instruction generation device, a method, and a system for generating, in real-time, an instruction concerning a communication session by using anonymized sensitive information data.

### Background

Recording communication sessions, like calls or conversations between at least two participants, for example, over a Voice over Internet Protocol (VoIP) network is essential in a call centre environment, medical, legal, health, finance industries, or government agencies and civic engagement with regard to, for example, voting and the like. The recorded communication sessions may be used for analysing, also in real-time, the conversations and giving feedback to an employee within the call centre environment, medical, legal, health, finance industries, or government agencies and civic engagement. Such feedback may be required to influence and improve existing or future calls by changing the course of the conversations.

Thus, until now, conversations or calls are influenced by means of analysing a communication session and providing information to a user based on what has been analysed. The analysis may also lead to security warnings sent to users for any suspicious activity or security breach. Such security warnings may comprise a notification, a message, a warning signal, or the like to highlight that a call or conversation may be a phishing attempt.

In order to detect these suspicious activities or security breaches in the prior art, sensitive information data, like personal names, email addresses, phone numbers, addresses, bank account details, or the like, is used. If during the call or conversation a participant, for example, queries another participant a large amount of sensitive information data in a short period of time, this may be an indication of a phishing attempt. This may also be an indication of personal details being expressed incorrectly. Furthermore, such a situation of querying another participant a large amount of sensitive information data in a short period of time during the call or conversation may be an indication that the participant is delivering his/her personal information with, e.g. high uncertainty or caution. Thus, it may not necessarily be a phishing attempt but may be an indication of a defensive participant not willing to give up his/her personal information. Thus, it is often necessary to concentrate on using sensitive information data when determining suspicious activities and security breaches and when analysing a communication session. Moreover, it is often necessary to concentrate on using the sensitive information data in order to ensure that the personal information or sensitive information data is correct and delivered in good faith. If it is determined that the sensitive data information data is not delivered in good faith, it may be necessary to instruct the participant to re-confirm the personal information or sensitive information data.

However, when recording calls and conversations, sensitive information data, like personal information regarding a participant of the call or the like, often needs to be anonymized due to compliance reasons. Thus, the sensitive information data is no longer available for analysing the communication session.

This leads to problems concerning the analysis of communication sessions when only anonymized sensitive information data is available. The question is how to analyse anonymized sensitive information data in real-time for directing communication sessions and improving security in order to, for example, avoid or stop phishing attempts or the like. There is no solution given in the prior art to train users and participants to a communication session on improving their handling of sensitive information. In particular, there is no solution given in the prior art to train or guide the users or augmenting the users' capacity via real-time notifications and instructions in order to improve their handling of sensitive information, including the identification and avoidance of security problems, and verification of essential information.

Thus, an aim of the present invention is to provide accurate and correct information on security events and/or influence communications between participants without reference to sensitive information data. The focus of the present invention is to be able to utilize sensitive information data which has been anonymized and still be able to positively influence a communication session, improve security, and appropriately handle sensitive information.

US 2016/352902 A1 relates to modelling calls in real time, with the goal of helping users improve and/or guide the outcome of the calls. The calls are modelled based on characteristics of the conversation and content of the conversation.

### Summary of the invention

It is desired to provide means for using and modelling anonymized sensitive information data (for example, anonymized sensitive information or personal information) and contextual data, such as transcripts, metadata, compliance policies, or the like, to automatically generate best-practice instructions, like (push) notifications, user prompts, real-time redactions on a user-interface (application, database, GUI), in order to improve safety, reduce or avoid security breaches, improve communication, and improve civil governance.

At least some of the mentioned objects and drawbacks are solved by the subject-matter of the independent claims. Further preferred embodiments are defined in the dependent claims.

According to one aspect of the present invention, an instruction generation device for generating, in real-time, an instruction concerning a communication session by using anonymized sensitive information data is provided. The instruction generation device may comprise a sensitive information analysis module configured to:
- receive the anonymized sensitive information data,
- receive communication data, the communication data comprising metadata regarding the communication session and/or text data reflecting the content of the communication session,
- generate an analysis result by analysing the anonymized sensitive information data with respect to the communication data, and to output the analysis result.

The instruction generation device may further comprise a user interface instructor module comprising a trained Machine Learning model, the user interface instructor module being configured to:
- receive the analysis result from the sensitive information analysis module,
- receive contextual data, the contextual data providing context to the communication session,
- generate a probability value representing an outcome of the communication session using the trained Machine Learning model, the analysis result and the contextual data being inputs of the trained Machine Learning model,
- generate the instruction when the generated probability value exceeds a threshold, and
- output the generated instruction to affect the outcome of the communication session.

According to another aspect of the present invention, a system for generating, in real-time, an instruction concerning a communication session by using anonymized sensitive information data is provided. The system may comprise a sensitive information processing module configured to:
- receive audio data and/or text data reflecting the content of the communication session,
- extract sensitive information data from the audio data and/or text data,
- generate the anonymized sensitive information data by anonymizing and classifying the sensitive information data, and
- output the anonymized sensitive information data.
The system may further comprise the above described instruction generation device.

According to another aspect of the present invention, an instruction generation method for generating, in real-time, an instruction concerning a communication session by using anonymized sensitive information data is provided. The instruction generation method may comprise the steps of:
- receiving the anonymized sensitive information data;
- receiving communication data, the communication data comprising metadata regarding the communication session and/or text data reflecting the content of the communication session;
- generating an analysis result by analysing the anonymized sensitive information data with respect to the communication data;
- receiving contextual data, the contextual data providing context to the communication session,
- generating a probability value representing an outcome of the communication session using a trained Machine Learning model, the analysis result and the contextual data being inputs of the trained Machine Learning model;
- generating the instruction when the generated probability value exceeds a threshold; and
- outputting the generated instruction to affect the outcome of the communication session.

According to another aspect of the present invention, a method executed in a system for generating, in real-time, an instruction concerning a communication session by using anonymized sensitive information data may be provided. The method may comprise the steps of:
- receiving audio data and/or text data reflecting the content of the communication session;
- extracting sensitive information data from the audio data and/or text data;
- generating the anonymized sensitive information data by anonymizing and classifying the sensitive information data; and
- outputting the anonymized sensitive information data.
Furthermore, the method may comprise the steps of the instruction generation method.

### Brief description of the drawings

FIG. 1 shows an embodiment of a system for generating, in real-time, an instruction concerning a communication session by using anonymized sensitive information data.
FIG. 2 shows an embodiment of a sensitive information processing unit.
FIG. 3 shows an embodiment of an instruction generation device within the system for generating, in real-time, the instruction.
FIG. 4 shows another embodiment of a system for generating, in real-time, an instruction concerning a communication session by using anonymized sensitive information data.
FIG. 5 shows an embodiment of an instruction generation method for generating, in real-time, an instruction concerning a communication session by using anonymized sensitive information data.
FIG. 6 shows an embodiment of a method executed in a system for generating, in real-time, an instruction concerning a communication session by using anonymized sensitive information data.
FIG. 7 shows an exemplary use case of a system used in a call centre environment.

### Detailed description

Preferred embodiments of the invention are described with reference to the figures. It is noted that the following description contains examples only and should not be construed as limiting the invention. In the following, similar or same reference signs indicate similar or same elements or functions.

As described above, sensitive information data comprising sensitive information, like personal information, often needs to be anonymized due to compliance reasons. Personal information may be information identifying a person or information in respect to a person, such as the name of the person, age, an address, an email address, a telephone number, bank account details, or the like. Thus, personal information may be sensitive information which the person may wish to keep confidential. For this reason, the sensitive information data often needs to be anonymized.

However, by anonymizing the sensitive information data, several problems occur when it is desired to use the sensitive information data for analysing a communication session in real-time, like a call or conversating between at least two participants or users. The real-time analysis of the communication session may be necessary to give feedback to the participants of the communication session and to reduce and avoid security breaches, prevent phishing attempts, and improve the course of existing or future communication sessions.

Thus, the present invention concentrates on solving these problems and an aim of the present invention is to provide a system for generating, in real-time, an instruction concerning a communication session by using anonymized sensitive information data. The instruction can be seen as a notification or feedback to the participants or users of the communication session and can be used to quickly intervene in and affect the communication session in order to reduce and avoid security breaches, prevent phishing attempts, improve the outcome of the communication session, and/or improve civil governance. The outcome of the communication session may be a result of the communication session. Furthermore, an aim of the present invention is to provide a system to train the participants of the communication session or users of the system or augment the participants' or users' capacity via real-time notifications and instructions in order to improve their communication techniques including the identification of security problems.

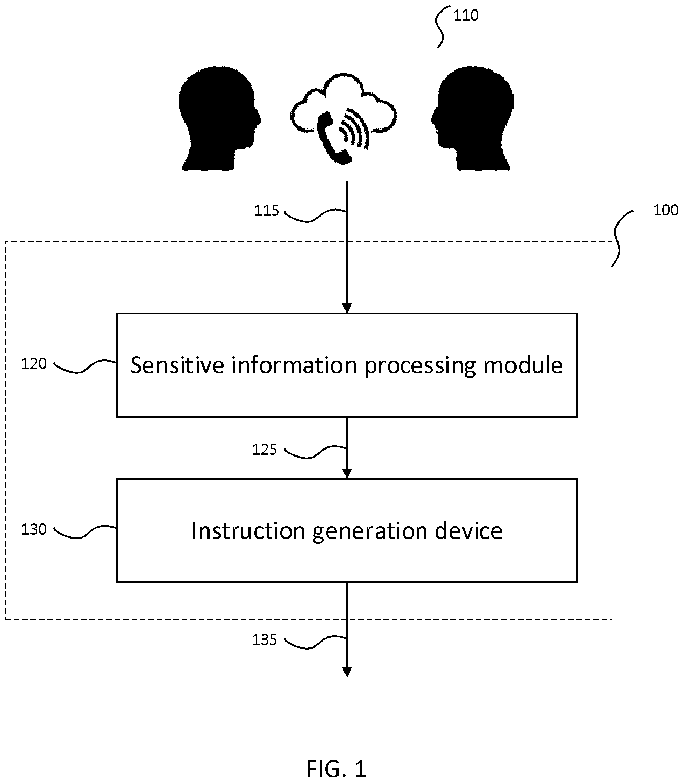

FIG. 1 shows an embodiment of a system 100 for generating, in real-time, an instruction concerning a communication session by using anonymized sensitive information data. The system 100 is delimited from a communication session 110 with dotted lines. However, the communication session 110 may also be part of the system 100.

In FIG. 1, the communication session 110 comprises two participants who communicate with each other. Communication may comprise any form of communication, in particular via text, audio and/or video channels. However, the communication session 110 may also comprise more than two participants. The communication session 110 may comprise a multimedia stream, call centre conversation, phone conversation, VoIP conversation, a conversation using chat, or any other conversation which can be received either live or recorded. The communication session 110 may be recorded using a microphone or the like and may be stored using a storing unit or a buffer (not shown). The recorded communication session 110 may also be directly sent to the system 100.

As further illustrated in FIG. 1, the system 100 may comprise a sensitive information processing module 120 and an instruction generation device 130.

The sensitive information processing module may receive an input 115 from the communication session 110. The input 115 may be audio data and/or text data reflecting the content of the communication session 110. For example, if the communication session 110 is a chat between at least two participants, the sensitive information processing module 120 may receive text data 115 reflecting, representing, or replaying the content of the communication session 110. If, for example, the communication session 110 is a phone call, a VoIP conversation or the like, the sensitive information processing module 120 may receive audio data 115 reflecting, representing, or replaying the content of the communication session 110. Thus, the audio data and text data 115 are records and transcripts of the communication session 110.

After having received the audio data and/or text data 115, the sensitive information processing module 120 may extract sensitive information data from the audio data and/or text data and may generate anonymized sensitive information data 125 by anonymizing and classifying the sensitive information data. Thus, the anonymized sensitive information data 125 does not include the specific sensitive or personal information with regard to a specific person but a classification representing a type of sensitive or personal information. The sensitive information processing module 120 may output the anonymized sensitive information data 125.

As explained above, the sensitive information data may comprise sensitive information or personal information about a person that the person normally wishes to keep confidential. The sensitive information data may be also seen as sensitive information events and may comprise a string of characters representing personal information. The personal information may comprise a specific/individual personal name, specific/individual personal details, a specific/individual age, a specific/individual address, a specific/individual email address, a specific/individual personal identification number, a specific/individual telephone number, specific/individual bank account details, or any other confidential and private details. The type of the personal information may reflect the classification of or kind of personal information. If, for example, the personal information is "Michael", the type of personal information is "personal name". Thus, the type "personal name" reflects that the personal information comprises a specific or individual personal name of a person.

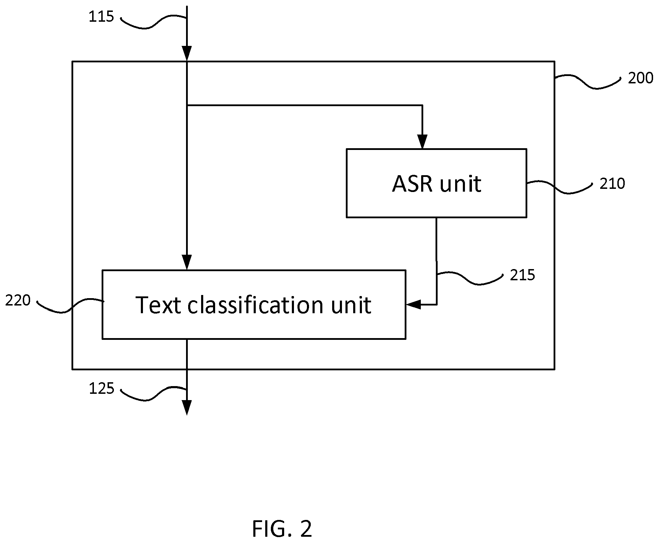

FIG. 2 shows an embodiment of a sensitive information processing module 200. The sensitive information processing module 200 may be the sensitive information processing module 120. The sensitive information processing module 200 may comprise an automatic speech recognition (ASR) unit 210 and/or a text classification unit 220. Thus, the sensitive information processing module 200 comprises all units required to classify and anonymize sensitive information data received from a communication session 110, the sensitive information data comprising, for example, any personal/sensitive information including names, personal details, classified events, personal identification numbers, or the like.

The ASR unit 210 may convert the audio data received from the communication session 110 to text data reflecting the content of the communication session 110. The ASR unit 210 is not necessary for cases where the input 115 from the communication session 110 is already (raw) text data, like an email, text conversation, support chat cases, completed form sample, or the like. The ASR unit 210 may be required for cases where the input 115 from the communication session 110 is (raw) audio data, like multimedia streams, conversations, call centre conversations, phone conversations, VoIP conversations, or any other conversations which can be received either live, in real-time, or recorded.

In the case where an ASR unit 210 is used, the ASR unit 210 may output speech-to-text (STT) data 215, which may be used in the text classification unit 220. The ASR unit 210 may be any known unit which can convert audio data to text data. In some cases where raw audio data 115 is received and processed by the ASR unit 210, the STT data 215 may also be sent directly to a user interface of a user terminal which is explained later. For instance, live STT data, i.e. STT data in real-time, can be relayed to a live user interface in conjunction with real-time or live communication guidance from other sources, including acoustic coaching, question guidance, user interface prompts, or the like.

If the input 115 from the communication session 110 is already text data, the text data 115 may be sent directly to the text classification unit 220. However, it is also possible that the text classification unit 220 needs a specific text data format in order to be able to process the text data. Thus, the sensitive information processing module 200 may further comprise a text data formatting unit (not shown) which may receive the input 115. The text data formatting unit may be part of the text classification unit 220 or may be a separate unit. The text data formatting unit may format or convert the text data into the text data format required by the text classification unit 220, wherein the text classification unit 220 uses the formatted text data, i.e. the text data formatted into the specific text data format, for extracting the sensitive information data and generating the anonymized sensitive information data. For example, the text data may be e-mails, SMS, chat transcripts or the like, wherein the text data formatting unit may format or convert the text data into a text data format which can be processed by the text classification unit 220.

If the input 115 from the communication session 110 is audio data, the audio data 115 may be first sent to the ASR unit 210 and the STT data 215 may then be sent to the text classification unit 220. Instead of directly sending the STT data 215 to the text classification unit 220, the STT data 215 may also be sent to the text data formatting unit (not shown) in order to format the STT data 215 into a specific text data format, wherein the formatted STT data 215 is then sent to the text classification unit 220.

The text classification unit 220 may function as a unit for extracting the sensitive information data from the text data 115 or the STT data 215 and generating the anonymized sensitive information data 125. If a text data formatting unit is used, the text classification unit 220 may function as a unit for extracting the sensitive information data from the formatted text data 115 or the formatted STT data 215 and generating the anonymized sensitive information data 125. The text classification unit 220 may identify and extract a specific string of characters within the text data reflecting the content of the communication session as the sensitive information data. Then, the text classification unit 220 may classify the personal information within the extracted sensitive information data by determining the type of personal information, and may generate the anonymized sensitive information data 125 by removing, for anonymization, the specific personal information from the sensitive information data and adding, for classification, a label representing the classification or type of the personal information. If, for example, the sensitive information data again comprises the personal information "Michael", the text classification unit 220 may remove the specific personal information "Michael" and add the label "personal name" to generate the anonymized sensitive information data. Thus, the anonymized sensitive information data no longer comprises "Michael" but the label "personal name". This means that the anonymized sensitive information data fulfils the compliance policies to anonymize sensitive, personal, or confidential information but still reflects the type of sensitive information data to which it refers.

For example, the text classification unit 220 comprises a model with the ability to classify certain elements or strings of characters of text data as sensitive information data. The model may be a Name Entity Recognition (NER) model or an Anonymization Token Level model which is able to identify whether a specific sequence or string of characters in text data is sensitive, i.e. confidential. A token may be a word or a part of word and is known in machine learning scenarios. The sensitive information data may refer to a sequence of binary numbers which shows if any token should be anonymized. The NER model may be any known NER model and is able to locate and identify named entities or strings of characters mentioned in unstructured text data for pre-defined categories such as person names, addresses, email addresses, telephone numbers, bank account details, or the like. Thus, the NER model may search for a certain sequence of sensitive information data for classifying and anonymizing the sequence of sensitive information data. The model may also be any other model, like a machine learning model, neural network, and the like, to be able to consider other factors, like context of the communication and the like, to determine whether or not the specific sequence or string of characters in the text data is sensitive. The sequence of sensitive information data may comprise a sequence of 0 and 1, wherein the machine learning model is able to identify this sequence of 0 and 1 as being personal data which needs to be anonymized.

If the text classification unit 220 identifies a sequence or string of characters as being sensitive, i.e. being sensitive information data, it may classify it as such by determining the type of sensitive event or sensitive information data, i.e. if it is a personal detail, ID number, address or phone number etc. Then, the text classification unit 220 may output this corresponding anonymized sensitive information data 125 comprising the classification or type of the sensitive information data. For classifying the sensitive information data and outputting the classification, any neural network may be used, such as a Bidirectional LSTM (BiLSTM) model, transformer model, or the like. The BiLSTM model is a Long Short-Term Memory (LSTM) network that is a bidirectional Recurrent Neural Network (RNN) network. The BiLSTM model or other neural network may be trained using training data comprising a correlation between various specific personal/sensitive information data and types of personal/sensitive information. The specific personal/sensitive information data may be an input to the BiLSTM model or the other neural network and the type or classification of the personal information data may be an output of the BiLSTM model or the other neural network. Once the BiLSTM model or the other neural network is trained to output the classification of any personal/sensitive information data that is input to the BiLSTM model or the other neural network, the trained BiLSTM model or the other neural network can be used for not-yet classified personal/sensitive information data to output the classification. Such a classification is used as a label to generate the anonymized sensitive information data. Above, a model has been described for identifying the sequence or string of characters, while another model has been described to then classify the identified sequence or string of characters. However, it is also possible that only one model is used which can both identify and classify the sequence or string of characters.

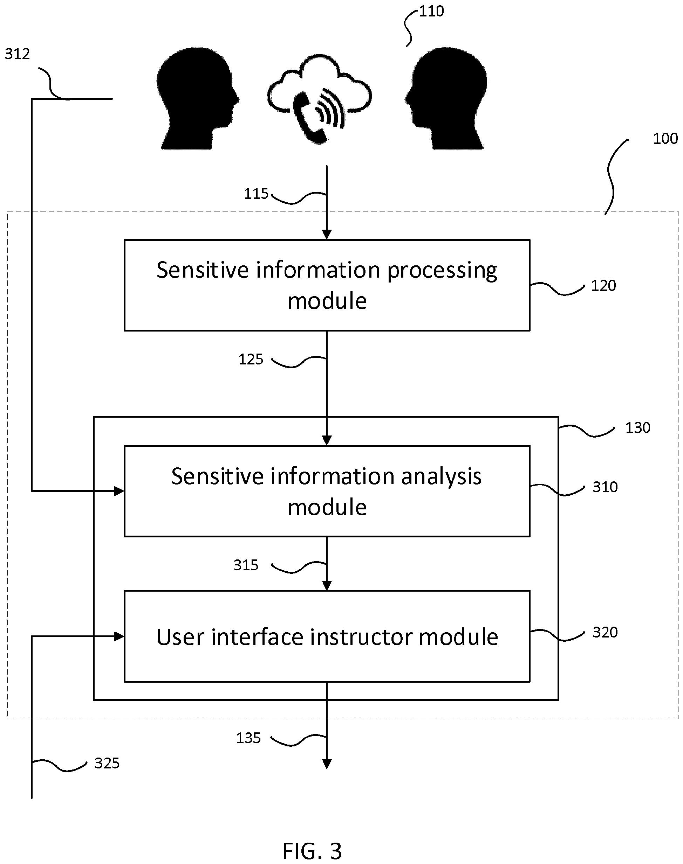

As further illustrated in FIG. 1, the instruction generation device 130 may receive the anonymized sensitive information to output an instruction 135 for affecting an outcome of the communication session 110. The instruction generation device 130 is now described in detail with regard to FIG. 3. FIG. 3 shows an embodiment similar to the embodiment described with regard to FIG. 1 and illustrates a communication session 110 and a system 100, the system 100 comprising a sensitive information processing module 120 and an instruction generation device 130. The communication session 110 is similar to the communication session 110 illustrated in and described with regard to FIG. 1. Thus, a detailed description is omitted at this point. The sensitive information processing module 120 of FIG. 3 is similar to the sensitive information processing module 120 and 200 of FIGs. 1 and 2 and thus a detailed description is also omitted at this point. The inputs/outputs 115, 125, and 135 of FIG. 3 are similar to the inputs/outputs 115, 125, and 135 of FIG. 1 and it is thus referred to the description given with regard to FIG. 1.

As shown in FIG. 3, the instruction generation device 130 may comprise a sensitive information analysis module 310 and a user interface instructor module 320. The instruction generation device 130 may be a device with a function for generating, in real-time, an instruction concerning the communication session 110 by using the anonymized sensitive information data 125. The instruction generation device 130 and its modules 310 and 320 are now described in detail below.

First, the sensitive information analysis module 310 is described in more detail. As explained above, the sensitive information processing module 120 may output the anonymized sensitive information data 125. The anonymized sensitive information data 125 may then be received by the sensitive information analysis module 310. As described above, the anonymized sensitive information data 125 may be obtained by anonymizing and classifying the sensitive information data, wherein the sensitive information data may comprise a string of characters representing personal information.

Furthermore, the sensitive information analysis module 310 may receive communication data 312, the communication data 312 comprising metadata regarding the communication session 110 and/or text data reflecting the content of the communication session 310. The communication data 312 may be provided via the communication session 100 and may be equal to the text data 115 or the STT data 215. The communication data 312 usually includes text data, like a transcript of the communication session 110, and metadata regarding the communication session 110, so that the sensitive information analysis module 310 is able to refer to the transcript for the anonymized sensitive information data 125. The transcript may refer to sequence of words or strings of characters encoded to a sequence of tokens (positive integers). Again, one token may be a word or a part of a word. The sensitive information analysis module 310 may receive the anonymized sensitive information data 125 from the text classification unit 220. The communication data 312 may also be derived from numerous sources, such as from a telephony system, browsers, networks, or the like, hosting the communication session 100. The metadata used from the communication session 100 and included in the communication data 312 may be communication metadata, location, timestamps, duration of the communication session 110, live or real-time text and/or audio data, or the like.

The sensitive information analysis module 310 may generate an analysis result 315 by analysing the anonymized sensitive information data 125 with respect to the communication data 312 and may output the analysis result 315. For example, the sensitive information analysis module 310, upon receiving the anonymized sensitive information data 125 as well as the necessary communication data 312, provides the following analysis: timestamps of when the sensitive information data or sensitive information events occurred during the communication session 110; frequency or amount of the anonymized sensitive information data or sensitive information events that occurred throughout the communication session 110; frequency or amount of the anonymized sensitive information data or sensitive information events for a particular classification of the personal or sensitive information (such as a personal name, address, email, telephone number, bank details like credit card number, or the like) that occurred throughout the communication session 110; and a duration that each piece of anonymized sensitive information data lasts.

According to an embodiment, the sensitive information analysis module 310 may perform the following steps for analysing the anonymized sensitive information data 125 with regard to the communication data 312. The sensitive information analysis module 310 may compare the anonymized sensitive information data 125 with the communication data 312. Furthermore, the sensitive information analysis module 310 may determine a time when the anonymized sensitive information data 125 occurred within the communication session 110 by using timestamps included in the communication data 312, may count a total amount or frequency of the anonymized sensitive information data found in the communication data 312, may count an amount or a frequency of the anonymized sensitive information data 125 for a particular classification of the sensitive information data, the anonymized sensitive information data 125 being found in the communication data 312, and/or may determine a duration of the anonymized sensitive information data 125 by using the timestamps included in the communication data 312. For example, for determining the total amount or frequency of the anonymized sensitive information data, the sensitive information analysis module may use text data included in the communication data 312, the text data being a transcript of the communication session 110, and may count the total number of times pieces of the anonymized sensitive information data is found within the text data. In addition, for determining the amount or frequency of the anonymized sensitive information data 125 for a particular classification of the sensitive information data (the sensitive information data underlying the anonymized sensitive information data, i.e. the anonymized sensitive information data is obtained from the sensitive information data by anonymizing and classifying the sensitive information data), the sensitive information analysis module 310 may again use the text data included in the communication data 312, the text data being the transcript of the communication session 110, and may count the number of times pieces of the anonymized sensitive information data of a particular classification or type that is found within the text data. For example, if within the text data five pieces of anonymized sensitive information data 125 classified as personal name and two pieces of anonymized sensitive information data 125 classified as personal address is found, the total amount or frequency of the anonymized sensitive information data 125 is seven, while the amount or frequency of the anonymized sensitive information data 125 for a particular classification of, for example, personal name of the sensitive information data is five in this case.

By using the time when a piece of anonymized sensitive information data 125 occurred during the communication session 110, it can be determined if the sensitive or personal information underlying the anonymized sensitive information data 125 happened, for example, in the first minutes of the communication session 110 as, for example, a greeting, or happened in the middle of the communication session 110 or towards the end. This information may be helpful to detect security breaches and phishing attempts. Furthermore, the duration of the pieces of anonymized information data 125 and the amount of the pieces of anonymized information data 125 may be an indication for security breaches and phishing attempts.

The sensitive information analysis module 310 may perform the analysis by using, for example, arithmetic algorithms or arithmetic operators, like mathematic addition rules, or by parsing (raw) text data or STT data in order to extract relevant data from the communication data, such as timestamps, and to calculate durations of words or string of characters representing the anonymized sensitive information data. Therefore, a timed transcript of the communication session 110 may be required as a reference point to extract the timestamps and the durations. Thus, the sensitive information analysis module 310 may be able to track when the anonymized sensitive information data 125 occurred relative to the communication session 110 and may also be able to determine the amount of anonymized sensitive information data 125 of a certain classification occurring.

As a result of the analysis, the sensitive information analysis module 310 may generate the analysis result 315. The analysis result 315 may comprise the result of the performed analysis. According to an embodiment, the analysis result 315 may comprise the timestamp of when the anonymized sensitive information data 125 occurred in the communication session 110, a first value representing the total amount or frequency of the anonymized sensitive information data 125 that occurred throughout the communication session 110, a second value representing the amount or frequency of the anonymized sensitive information data 125 for a particular classification of the sensitive information data that occurred throughout the communication session 110, and/or a third value representing the duration of the anonymized sensitive information data during the communication session 110. The duration may be a duration of a particular piece of anonymized information sensitive data 125 during the communication session 110, an average duration throughout all pieces of anonymized information sensitive data 125 during the communication session 110, or a total duration that can be obtained by summing up the duration of each piece of anonymized information sensitive data 125 during the communication session 110.

The sensitive information analysis module 310 may directly output the analysis result 315 to the user interface instructor module 320. By performing the analysis and outputting the analysis result 315 to the user interface instructor module 320, the user interface instructor module 320 is provided with relevant information for guiding a user interface on a user terminal (described later) and giving feedback to a user of the user terminal.

Now, the user interface instructor module 320 is described in more detail with regard to FIG. 3. The user interface instructor module 320 may comprise a trained Machine Learning model (not shown) for generating an instruction to affect the outcome of the communication session 110. The trained Machine Learning model may be a bidirectional encoder representation model that has been trained. The trained Machine Learning model is described in more detail below.

As indicated above, the user interface instructor module 320 may receive the analysis result 315 from the sensitive information analysis module 310. Furthermore, the user interface instructor module 320 may receive contextual data 325, the contextual data 325 providing context to the communication session 110. Thus, the user interface instructor module 320 may process two inputs: the analysis result 315 from the sensitive information analysis module 310, the analysis result 315 being based on the anonymized sensitive information data 125 and the communication data 312, and the contextual data 325. By processing the two inputs 315 and 325, the user interface instructor module is able to output an instruction 135 to, for example, a user interface of a user terminal described below. By not only considering the communication data but additionally also the contextual data, the anonymized sensitive information data can be correctly analysed and interpreted and a more accurate instruction 135 is generated which is tailored to any communication session 110. Thus, the outcome of the communication session 110 can be improved in real-time.

The contextual data 325 may be received from various sources and models. The contextual data 325 may include and represent various data from outside of the communication session 110, the data not being (directly) linked to the content of the communication session 110. Thus, the contextual data 325 provides information that further describes the communication session 110 and its surroundings. For example, the contextual data 325 can be extracted from the world outside of the communication session 110. The contextual data 325 may include but is not limited to: communication metadata including location (also called location context) and/or duration (also called duration context), the location context representing the location where the communication session 110 takes place, like a city, a country, a particular address, etc., and the duration context representing a time and duration of the communication session 110; information on at least one end-user or participant of the communication session 110; local time of the at least one participant, wherein the local times may differ between the participants when the participants are located in different time zones; compliance requirements (on a company internal basis as well as on a national level, like with General Data Protection Regulation (GDPR)); data on previous communication sessions; call or communication history; best practice communication standards with regard to the communication session 110; emotional state and detection of at least one participant; voice volume of a least one participant (e.g. is the participant speaking in a loud or quiet voice); vocal qualities or vocal pitch of at least one participant (e.g. is the participant speaking in high or low tone); and/or speed at which at least one participant is communicating.

Best practice communication standards may refer to standards and behaviours which may lead to improved communication sessions. Since the best practice communication standards should be referenced to the necessity of having sensitive information data measured and analysed, all of the best practices should be connected somehow to a sensitive information outcome, i.e. improving the accuracy of a sensitive information expression, improving the sentiment of a participant in a communication session, like a client, customer, or citizen, before and after requesting sensitive information etc. One example of a best practice communication standard is mirroring which may be a good strategy to get a client to feel more comfortable with disclosing personal information in a communication session 110. Mirroring describes a behaviour where one participant starts mirroring the other participant in the communication session 110. For example, one participant starts saying the name of the other participant more often as it is known that such a behaviour may increase a chance of a positive outcome, like higher sales numbers if the communication session is a sales call. Other best practice communication standards may be to speak slower, avoid whispering and shouting, avoid sensitive topics, like politics, religion, or the like in order to achieve improved communication outcomes. The best practice communication standards in combination with the analysis result 315 may lead to semantic instructions 135 for how to frame a conversation to put a client or a citizen speaking to a government agency or fulfilling civic duties during a communication session at ease. The semantic instructions 135 may be dependent on some profiling of the communication participants, e.g. framing a sensitive topic as negative or positive dependent. Such profiling may also be included in the contextual data 325. By considering such a best practice communication standard in combination with the analysis result 315, instructions 135 may be generated such that a communication session 110, like a sales call or any other call, goes more smoothly resulting in a desired outcome. Such an instruction 135 may change the course of the communication session 115 in such a way that participants of the communication session 115, like a client, feels that their sensitive information is used correctly and discreetly. For example, by employing such best practice communication standards for generating an instruction 135, it is ensured that a user or participant in the communication session 110 calms down or understands the sentiment of the other participant, like customer or citizen, in the case the he/she delivered sensitive information data with a high degree of caution or hesitation. Another example of a best practice communication standard is re-framing a question about sensitive information data to ensure the accurate expression of the sensitive information by a participant in the communication session, like a customer or citizen. For example, if the contextual data 325 indicates that a first instance of personal information is relayed to one participant in the communication session 110 with hesitation, then an instruction 135 in the form of a notification may be shown on a user interface reminding and instructing the respective participant to re-frame his/her requests for personal information in the communication session 110, e.g. make the request for personal information in a more positive tone, or make the request for personal information with added context of why the information is necessary in the communication session 110.

As mentioned above, the contextual data 325 may comprise an emotional state of the at least one participant of the communication session 110. The emotional state may refer to or represent an emotion of at least one participant within the communication session 110. The emotional state may be obtained by extracting an emotion of the at least one participant from audio data of the communication session 110 and converting the emotion to a sequence of integers using an analysis module. The analysis module may be an emotion detection module, acoustic module, and/or biometric voiceprint model which may receive the audio data from the communication session 110, like the audio data 115, for extracting the emotion and obtaining the emotional state as contextual data 325. For example, analysis module, like the emotion detection module, acoustic module, or biometric voiceprint model, is used to extract the emotion from a voice of the at least one participant. The analysis module may analyse and extract the features pitch, timbre, emotions, sentiment, volume, speech rate, voice intensity, rhythm of speech, pauses, articulation or the like in the voice of a participant and determine the emotion based on this analysis. The volume may indicate how loud the participant is speaking and the speech rate may indicate how fast the participant is speaking. The analysis module can be inserted around the ASR unit 210, because the ASR unit 210 may have processes which are able to extract pitch, timbre and the like. Pitch and timbre of a participant's voice can then be used to determine the participant's emotion. Such analysis modules may then transmit the extracted features as contextual data 325 to the user interface instructor module 320.

As explained above, the emotional state of the participant may be determined using an analysis module like an emotion detection module, acoustic module, and/or biometric voiceprint model, wherein the voice of the participant may be analysed. The analysis module, like the emotion detection module, acoustic module, and/or biometric voiceprint model, may be a machine learning model. Thus, it is possible to extract the emotion of the at least one participant using, for example, the voice of the at least one participant. For example, pitch or timbre of the voice is used to extract the emotion and determine the emotional state. According to another example, if the voice of the participant is trembling, the degree of trembling can be used to extract the emotion and determine the emotional state. A specific amount of trembling can then be an indication that the participant is anxious. Thus, in this case, the emotional state of the participant may represent anxiety. If, however, the voice of the participant is, for example, vivid, the vividness may be an indication that the participant is content with the situation, like the communication session or a request regarding sensitive information data. Thus, in this case, the emotional state may represent contentment. The emotional state may then be included in the contextual data 325. According to another embodiment, the emotional state of the participant may be determined by referring to a questionnaire that has been filled out by the participant asking questions about the emotions of the participant.

In order to be able to process the emotional state by the user interface instructor module 325, the extracted emotions may be converted to a sequence of integers using the analysis module. The sequence of integers may represent one of N emotions for every token - the result deriving from a separate model for emotion detection. Using tokens is a known technique in machine learning, wherein such a process is called tokenization, and can also be used for emotion detection.

Besides the emotional state, the contextual data 325 may include (vocal) pitch and the like from the participants in the communication session 110. The pitch may refer to a sequence per every token of floating-point numbers of variable length which may be extracted from audio data 115 of a communication session 110. Such a process may be again called tokenization, whereby data, here the pitch, is transformed, i.e. tokenized, into these tokens which are representations of numerical values. The expression "the pitch may refer to a sequence per every token" may mean that the pitch is a sequence of sequences, wherein the number of sequences in a pitch sequence is equal to a number of tokens.

The contextual data 325 may further comprise data related to the current weather during the communication session 110 or news data which represents the political situation or the like during the communication session 110. Correlating the analysis result 315 with external world events and/or product trends, valuable feedback and instructions 135 can be provided for a user of the system.

According to another example, the contextual data 325 may comprise the location context regarding the communication session 110 which may be correlated with the analysis result 315 to determine whether specific locations of communication sessions have a higher frequency of sensitive information data occurring during a communication session 110 that lead to desired outcomes, like no phishing attempts. Based on this information, an instruction 135 may be generated informing a user or participant of the communication session 110 that a specific frequency of sensitive information data may be optimal for achieving the desired outcome, or sub-optimal, wherein in this case an adjustment during the communication session 110 may be required. Thus, the instruction 135 may instruct the user or participant in a manner to obtain the optimal frequency of sensitive information data.

According to another example, the location context with regard to a specific location X may indicate that the location X has a higher volume of sensitive information requests, i.e. requests for sensitive information data, because of a language barrier or culture of cynicism which makes participants in communication sessions more often incorrect (intentionally or unintentionally) in their expressions of sensitive information data. If location X has a higher frequency of sensitive information requests and this is reflected in the contextual data 325, an instruction 135 in the form of a notification may be generated to a user or participant during the communication session 110, wherein the instruction 135 instructs the user or participant to clarify the sensitive information data in order to reduce incorrect expressions of sensitive information data. This may also be valid for other characteristics related to the communication session 110, like demography, cultural background, time of communication, and the like.

It is possible that participants in a communication session 110 are more likely to be incorrectly expressing sensitive information data in the morning due to, for example, fatigue. Thus, the contextual data 325 may comprise time data indication the time of the communication session 110, like 9am. Based on the contextual data 325 comprising the time data and the analysis result 315 indicating, for example, the frequency of the anonymized sensitive information data within the communication session 110, an instruction 135 in the form of a notification may be generated. The instruction 135 may instruct a user of the system 100 to speak, for example, more slowly to avoid the expression of incorrect sensitive information data such that the frequency of the anonymized sensitive information data can be reduced.

Another example may be related to covid tracking QR code information that people are required to enter during the covid pandemic. In this example, there may be a correlation between the contextual data 325 indicating location, demographics etc. with regard to the communication session 110 and the analysis result 315 indicating the frequency of the anonymized sensitive information data within the communication session 110. The frequency of the anonymized sensitive information data may increase due to entering (either intentionally or unintentionally) incorrect information out of convenience, negligence, resentment, or errors. Based on the contextual data 325 and the analysis result 315, an instruction 135 may be generated in order to avoid incorrect information and thus the increase of the anonymized sensitive information data frequency due to the incorrect information, because the incorrect information may lead to a public safety issue. People may be hesitant to provide transparency during a communication session 110, like a call, if the call is related to government activity. Even if such a situation is not a phishing attempt, such a situation may be interpreted as an attempt to misdirect authorities with incorrect information.

The contextual data 325 may comprise any data as listed above that can be correlated with outcomes and sensitive information data as an end-to-end blackbox. In the case of emotional states, it may be useful to correlate the analysis result 315 and thus the anonymized sensitive information data 125 with the emotional state of participants of the communication session 110 for intent detection, sentiment detection, emotional detection with regard to the sensitive and personal information.

The purpose of first generating and analysis result 315 by analysing the anonymized sensitive information data 125 with regard to the communication data 312, and then processing and analysing the generated analysis result 315 with regard to the contextual data 325 is to correlate with and provide context to the anonymized sensitive information data 125. Thus, a more accurate instruction 135 can be generated to improve security and feedback for the participants of the communication session 110. Furthermore, the outcome of the communication session 110 can be improved. This will be described in more detail below.

Once the user interface instructor module 320 has received the contextual data 325, the user interface instructor module 320 may generate a probability value representing an outcome of the communication session 110 using the trained Machine Learning model. For the trained Machine Learning model, the analysis result 315 and the contextual data 325 are inputs of the trained Machine Learning model. The probability value representing the outcome of the communication session 110 is then the output of the Machine Learning model. The outcome of the communication session 110 is a result of the communication session 110, like a reaction or action that either ends the communication session 110, changes the course of the communication session 110, or happens after the communication session 110 is ended. The probability value shows a likelihood that a specific outcome of the communication session 110 will happen. Thus, the probability value shows the likelihood of an occurrence of a specific outcome that has not yet occurred. The probability value is required to be able to determine whether it is necessary to intervene or affect or somehow influence the communication session 110 in order to ensure a desired outcome. A desired outcome may be to end the communication session 110 if the probability value reflects a phishing attempt or security breach or change the course of the communication session 110 by one participant of the communication session 110 acting in a specific way during the communication session 110.

The trained Machine Learning model may be trained on many labelled communication samples from previous communication sessions and the respective contextual data in order to determine best practice communication standards and generate instructions 135 for responding to and managing sensitive information data during a communication session 110. Labelled communication samples mean that the outcomes of the respective communication sessions are known. Thus, the training data may comprise correlations between previous labelled communication samples of communication sessions that have been stored, the contextual data representing the context to each communication session, and the outcomes respective to each communication session. With these correlations, the Machine Learning model can be trained, wherein the communication samples from the previous communication sessions and the respective contextual data function as input for the Machine Learning model and the probability values for respective outcomes function as the outputs of the Machine Learning model.

For training the Machine Learning model, it is required to identify the same sensitive information data and use analysis results that are similar to the sensitive information data and analysis results used later by the trained Machine Learning model. For example, if it is desired to use sensitive information data of the type personal name later on when generating an instruction 135 with regard to a new communication session 110, the training data should comprise a correlation between the contextual data, the analysis result being generated based on sensitive information data of the type personal name, and the respective outcome. If the analysis result that is input to the user interface instructor model 320 when running the trained Machine Learning model comprises timestamps of anonymized sensitive information data occurring, frequency of anonymized sensitive information data that occurred throughout the communication session, frequency of anonymized sensitive information data for a particular classification of the sensitive information data (such as a name, or credit card number etc.) that occurred throughout the communication session, and the duration that each sensitive information event lasts (as described in detail above), the training data should also comprise such analysis results which are correlated to known outcomes when these analysis results are combined with the contextual data.

As mentioned above, the communication samples and previous communication sessions are labelled with the outcomes of the communication sessions. The outcomes may represent security breach, phishing attempt, undesired or unsuccessful outcome, desired or successful outcome, the type of outcomes of the communication session, if compliance measures were fulfilled, if action points during the communication were acted upon following the communication, if there were emotional anomalies or suspicious behaviour in the communication samples.

The action points may be tasks or to-do items for one or both of the participants during a communications session. In the case of a suicide hotline call centre, it is important for a call centre agent to show empathy in these cases. If no personal name or other sensitive information data is identified during a call, the call centre agent may be prompted to at least ask the person for his/her name to be able to form a more emotional connection with him/her. Thus, in this case, the action point may be a task to ask for more sensitive information data, like the personal name. In another example, the action point may be a task to inform an end-user about the amount of personal data that have been requested during a communication session. For example, if personal data was requested 12 times during a communication session, like a call, a call centre agent may have the task to inform the end-user about the amount of personal data requests, here 12. Such tasks may be part of a use-case where government institutions want to build trust with citizens by informing the citizens about the amount of personal data requests. A successful or desired outcome of the communication session 110 with regard to action points may be that all action points, i.e. tasks, were fulfilled. An unsuccessful or undesired outcome of the communication session 110 with regard to action points may be that at least one action point was not fulfilled. The instruction 135 may prompt a participant of the communication session 110 to fulfil the action points or may inform the participant that all action points were fulfilled.

A plurality of neural networks, machine learning algorithms, and deep-learning models can be used for the trained Machine Learning module in order to find a correlation between the contextual data 325, the analysis result 315, and the outcomes of the communication samples. An example of such deep-learning model is a BERT (Bidirectional Encoder Representations from Transformers) model which may use the analysis result 315 and the contextual data 325.

For training the Machine Learning module in order to find a correlation between the contextual data 325, the analysis result 315, and the outcomes of the communication samples, a database may be used which correlates contextual data, like certain emotions, and analysis results to specific communication session outcomes. For example, there may be a positive association between a high positive sentiment score and certainty of an accurate expression of sensitive information, which may be stored in the database for access by the Machine Learning module.

The Machine Learning module may be a standard BERT model which utilizes the sum of token, token type and positional embeddings as an initial input to a first self-attention layer. Self-attention is a recent approach to machine learning which allows machine learning models to become much better. The self-attention layer may be necessary, as a self-attention model focuses or gives attention to each input source, for example each word in a transcript of the communication session 110. The self-attention layer gives each input source a context score which is also known as attention score. This context score may lead to better results when analysing the communication session 110. In other words, the self-attention layer provides a way to reweight input based on the context score of each input, i.e. based on the context score of each word in the transcript of the communication session. Therefore, every word has equal opportunity to influence the reweighted output. "weighting" in the case of machine learning refers to where emphasis should be placed for training purposes. For example, if a machine learning engineer wants to see certain input, he/she can tell the machine learning model to give more attention to that specific input. Thus, more weight has been afforded to that input source.

For the present invention, token type embedding can be removed and replaced with contextual data embeddings that refer to the contextual data 325. The contextual data embeddings may be added into the sum to output a probability of an outcome of the communication session 110. For example, the trained Machine Learning model or BERT model may use (1) emotional state and vocal pitch of at least one participant of the communication session 110, the emotional state and vocal pitch being included in the contextual data 325, and (2) the analysis result 315 being generated based on the anonymized sensitive information data 125 and the communication data 312. This may lead to three embeddings for the trained Machine Learning model or BERT model: an emotion embedding based on the emotional state, a pitch embedding based on the vocal pitch, and a sensitivity embedding based on the analysis result and thus the anonymized sensitive information data.

Embedding in machine learning is a technique of mapping from, for example, words to vectors, wherein vectors are a combination of numbers which represent the word. The vectors can be used to achieve better analysis or relating. For example, if we take the following words "persian", "munchkin", and "exotic shorthair", the words are, without context, random and unrelated. However, in vector space, these words are in fact closely related according to a defined measure, which in this case would be cat breeds. The embedding gives machine learning models a lot more information than just a random word "munchkin", wherein this additional information helps to improve the performance of the machine learning models.

If emotion is taken as an example, there may be embeddings that define certain features of an emotion, like angry, sad, happy or the like. If the emotional states "happiness" and "sadness" are extracted as contextual data 325 from communication sessions 110, both emotional states represent emotions. However, by using embedding, the emotional states "happiness" and "sadness" are represented as not being close in vector space even though both emotional states refer to emotions. Thus, the embeddings may show that "happiness" and "sadness", although both being emotions, are very different. Whenever emotions are analysed, the emotions may be mapped to a vector and it may be determined where on this scale the emotions lie. The emotion and sensitivity embeddings may be implemented by adding two new embedding layers to the trained Machine Learning model or BERT module. Thus, the trained Machine Learning model or BERT model may utilize emotion embedding as one of its layers which uses the emotional state as an input from the analysis module. The emotion embedding may be performed on the emotional state, wherein the emotional state may be transformed with linear mapping into an emotion embedding space of the trained Machine Learning model.

Furthermore, pitch embedding may be performed on the vocal pitch which is received from the analysis module. The trained Machine Learning model or BERT model may utilize pitch embedding as one of its layers which uses the vocal pitch as input from the analysis module. However, the pitch embedding may be done differently compared to the emotion embedding as pitch may encompass a large amount of data and cannot be easily represented by numbers. In order to train the BERT model properly, it may be necessary to have a same structure to the pitch data. Thus, it should be avoided that the pitch data looks different from other pitch data. In order to have the same structure to the pitch data, every pitch sequence (for every token) may be padded/truncated to a constant length and then transformed with linear mapping into the BERT model's embedding space. The trained Machine Learning model or BERT model may only accept the vocal pitch as input from the analysis module after the padding/truncating and/or linear mapping has been performed. Padding and truncation refer to methods which make the vectors (the series of numbers described above) longer or shorter. If, for example, there is a vector that has too few numbers, it might not be interpreted by the machine learning model, as the model needs to have an exact amount of vector numbers. To fix this, a few numbers may be added to a vector. Such an addition is called padding. Once the right length of numbers is achieved, this is mapped to the relevant values which will allow it to work with the pitch embeddings. Thus, for pith embedding, the sequence of the vocal pitch may be truncated or padded to a constant length and transformed with linear mapping into a pitch embedding space of the trained Machine Learning model. Linear mapping may be used to convert data input into a form which will match a given model's dimensionality or size input. For example, if a Machine Learning model requires a certain data format 'AB' but the input data is "ABC", then linear mapping transforms the input data "ABC" to "AB" so that the Machine Learning model is able to use the input data. Linear mapping may not be necessary, because similar transformation results can be achieved with padding and truncating. Thus, linear mapping can be removed. For example, when configuring padding settings, the padding settings may include a requirement to add a fixed amount of numbers to make it usable for the Machine Learning model. However, even though similar transformation results can be achieved with padding and truncating, it may be advantageous to add linear mapping because linear mapping increases the robustness of a Machine Learning model and increases the amount of data that can be processed by the Machine Learning model. Linear mapping may be used to reshape any data type that doesn't match the model's input dimensionality, such as pitch or emotion-based data. Most other data types like text data already satisfy a model's input requirements thus linear mapping may not be required.

Above, a BERT model-based architecture has been described in detail. However, instead of a classification of special (CLS) tokens in BERT model-based architecture, a linear layer (followed by sigmoid transformation) may be used which maps hidden states of all the tokens of the last self-attention layer's output to one final output - probability of the call being a security concern (i.e. fraud or phishing attempt). As described above, self-attention may be used to generate the context score to give a more accurate result. A final step can be to map the results of the self-attention outcome with a new 'layer' which will determine the probability that a communication session 110 is linked to a security concern or not. Once an attention score is determined, this value can be used to find out how close a communication session 110 is to being a security threat or not. This can be done if the attention score is processed by a final layer.

All the weights for the BERT model to be used may be initialized from standard pre-trained BERT models, except for classification head and the added embeddings. The classification heads may be additional layers which can be added to an existing machine learning model in order to help with specific tasks. To boost the performance of the BERT model further, additional pre-training steps may be added on the data used in the BERT model via masked language modelling. Masked language modelling is an example of pre-training. The masked language modelling is a method of giving the machine learning model some data, like transcripts of a communication session 110, wherein the machine learning model has to figure out what comes next. For example, if the machine learning model receives the data "The sky is ...", the machine learning model needs to figure out what comes after the word "is".

Instead of the vocal pitch and emotions obtained from the contextual data 325, other data from the contextual data 325 may be used as inputs for the Machine Learning model within the user interface instructor module 320. For example, it is possible to use the emotional state of at least one participant and news data representing the political situation. If the emotional state shows, for example, distress of at least one participant and the news data shows a political crisis, the emotional state may be interpreted in such a way that the distress of the at least one participant results from such a political crisis and not from the present communication session 110. This may be helpful when generating the instruction 135. For example, if the distress of the participant results from a political crisis and not from the communication session, it is not required to affect or influence the communication session 110. If, however, the distress of the participant results from the communication session, the instruction 135 may be to affect or influence the communication session 110. This is described in more detail below.

Using the approach described above, patterns or correlations between the analysis result 315, like the frequency of anonymized sensitive information data 125 occurring during the communication session 110, contextual data 325, like the emotional state of at least one participant, and outcome of the communication session 100, like security breaches or desired outcomes, can be determined and used as training data for training the Machine Learning module in the user interface instructor module 320. These training data may then be used as a reference point for optimal sensitive information management during future non-labelled real-time or recorded communication sessions 110. For instance, there may be a correlation between sensitive events occurring in a communication session x amount of times, and a higher chance of security breach. In this case, if the probability values output by the Machine Learning module is between 0% and 100%, the probability value of the outcome of a possible security breach for this communication session may, for example, be higher than 50%. However, the probability values do not need to be percentage values. For example, the numerical values or binary values 0 and 1 can be used to represent probability values and percentages.

When a probability value representing a likelihood of an outcome, for example a security breach, of the current communication session 110 is output, the user interface instructor module 320 may generate the instruction 135 when the generated probability value exceeds a threshold. The threshold may be a pre-set threshold being set by a user of the instruction generation device 130. For example, the threshold may be set to 40% or 50% if the probability values are percentage values. According to another example, the threshold may be set to a numerical value between 0 and 1 if the probability values are numerical values or binary values. If the probability value exceeds, i.e. is higher, than the threshold, this may indicate that there is a high chance that the outcome of the current communication session 110 is a security breach. Thus, an instruction 135 may be generated to affect the outcome of the communication session and avoid the security breach outcome. It is also possible that the outcome of the communication session 110 is the termination of the communication session 110. For example, the generated instruction 135 instructs a participant of the communication session 110 or a user terminal (shown later) which is used within the communication session 110 to end or terminate the communication session 110 when the generated probability value exceeding the threshold represents a security breach.

According to another example, the instruction may instruct the user terminal (shown later), a recording medium which records the communication session 110, or any other medium to flag the communication session 110. For example, the communication session 110 is flagged as a security breach when the generated probability value exceeding the threshold represents that the sensitive information expressed by a participant of the communication session 110 did not pass a certainty of accuracy threshold. The user terminal, recording medium, or the like may further be instructed to store and route the flagged communication session 110 to a training database for demonstration and training purposes. According to another example, the instruction may instruct that the flagged communication session 110 is stored, duplicated and encrypted. The instruction may instruct to route the encrypted communication session 110 to another user terminal which may be a user terminal of an authority or the like. By inserting the steps of duplication and encryption, it is ensured that the communication session 110 is secured and backed up as a potential piece of evidence that is tamper-proof.

As described above, a flagged communication session 110, for example a recording of a call being flagged by the user terminal, a recording medium or the like, may be stored in a training database, or escalated to an authority in the case that the expression of sensitive information had a high degree of suspicion and thus the generated probability value exceeded a threshold representing a security breach. The flagged communication session 110 may be used as a training sample for how to respond to incorrect expressions of sensitive information, or to escalate the call to be used as evidence to an authority. For example, if a government agency is attempting to verify the personal details of a positively tested citizen during the covid pandemic over a phone call in order to make sure the citizen complies with self-isolation, and the citizen has a high degree of uncertainty when expressing his/her sensitive information, this may be an indication that he/she is falsely responding or misleading the government agency to cover up his/her non-compliance with self-isolation. In this case, a prompt to a call handler may be issued to re-confirm the personal details, and an instruction may be generated by the user interface instructor module 320 to flag the call for further investigation if there is a high degree of suspicion. The recording of the call may then be stored and automatically routed to the training database, so that other call handlers can analyse the call for improving their ability to handle sensitive information. The call recording may also be encrypted, stored, and automatically made available as an encrypted hardcopy, so that in the case the recording is used as evidence for misleading conduct, the call recording may serve as a tamper-proof piece of evidence supporting further judicial or civil action.

According to another example, the participant of the communication session 110 may receive an instruction 135 informing the participant that there is a phishing attempt in the communication session 110 and may get the instruction or action point to end or terminate the communication session 110. Therefore, this affects the outcome of the communication session 110 as the communication session 110 is terminated or ended. Thus, the instruction 135 may be an instruction to a participant of the communication session 110 to immediately end the communication session 110 or may be an instruction to a user terminal used in the communication session 110 to automatically end the communication session 110. In the second case, the communication session 110 is ended and safety of the participants is ensured without the need for a person to become active. The generated instruction is then output to affect the outcome of the communication session.

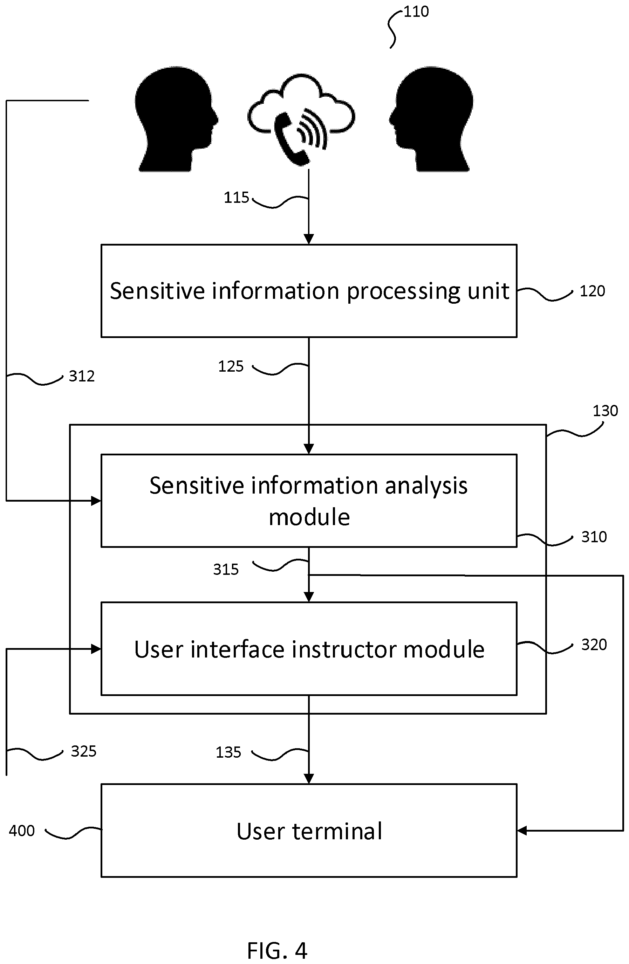

FIG. 4 shows another embodiment for generating, in real-time, an instruction concerning a communication session 110 by using anonymized sensitive information data. In FIG. 4, the communication session 110, the units and modules 120, 130, 310, 320 and the inputs/outputs 115, 125, 315, 312, 325, 135 are similar to the units, modules, inputs, and outputs described with regard to the previous figures. Thus, a detailed description is omitted at this point.

FIG. 4 further shows a user terminal 400 which provides a user interface. The user terminal 400 may be a computer, a smartphone, a tablet, or any other user device capable of providing a user interface. The user terminal 400 may receive the instruction 135 from the instruction generation device 130 and may output the instruction 135 to a user. If, for example, the instruction 135 is a notification or message, the user terminal 400 may display the instruction 135 such that the user of the user terminal 400 can read the instruction 135 and act accordingly. If, for example, the instruction 135 is a warning signal, like an audio signal, the user terminal 400 may output the instruction 135 over speakers to alert the user of the user terminal 400. For example, by outputting the instruction 135 to the user of the user terminal 400, the user may be alerted to end the communication session 110 when a security breach is detected. According to another example, as described above, the user terminal 400 may receive the instruction 135 from the instruction generation device 130 and may be instructed to flag the communication session 110, and store and route the flagged communication session 110 to a training database. According to another example, the user terminal 400 may receive the instruction 135 from the instruction generation device 130 and may be instructed to flag the communication session 110. The user terminal 400 may further be instructed to store, duplicate, and encrypt the flagged the communication session 110 and may route the encrypted communication session 110 to another user terminal (not shown) which belongs, for example, to an authority.

According to another embodiment, the sensitive information analysis module 310 may not only transmit the analysis result 315 to the user interface instructor module but may also transmit the analysis result 315 to the user terminal 400. The user terminal 400 may display the analysis result 315. A possible reason why it is desirable to send the analysis result 315 directly to the user terminal 400 is that these analysis results can be displayed and used for informing the user. The instruction 135 of the user interface instructor module 320 may then provide more qualitative insights to the displayed analysis result and provide guidance and feedback for the user. Thus, by displaying the analysis result 315 together with the instruction 135 on the user terminal 400, the user may receive more detailed feedback regarding the communication session 110 to improve the current and future communication session. If the analysis result is enough for the user to analyse the communication session 110, the user may also decide to turn off the user interface instructor module 320 and refrain from receiving the instruction 135.

According to another embodiment, depending on the classification of the sensitive information data and configuration of the user, the anonymized sensitive information data and analysis results may be recorded and stored in a storing unit (not shown) for future retrieval by the user interface instructor module 320 and/or the user terminal 400 for coaching or feedback purposes. An example of this is outlined in the call centre use case described below. Retrieval of recorded anonymized sensitive information data and analysis results can be used to compare with other communication samples by the machine learning algorithms in the user interface instructor module 320. For example, a distance vector can be used to determine how far the other communication samples are from a desired outcome, i.e. how dissimilar the sensitive information data from the other communication samples are from the recorded anonymized sensitive information data with regard to their acoustic attributes. For coaching purposes, instructions may be output to reduce the distance vector and to thus come closer to the desired outcome.

According to another embodiment, the user interface instructor module 320 may generate a database storing a correlation between the analysis result 315, the contextual data 325, and the probability value representing the outcome of the communication session 110 in order to compare a plurality of communication sessions and output a probability distribution of an outcome of a subsequent communication session. Thus, a communication session history is created and the outcome of the communication session 110 can be compared to a plurality of communication sessions. Thus, the probability distribution of a likely outcome of a subsequent communication session can be output based on the frequency, duration, and location of sensitive information data in the subsequent communication session.

Above, it has been described that the instruction 135 may be used to end a communication session 110 in order to ensure safety and avoid security breaches. According to another example, the correlations between analysis result 315, contextual data 325, and outcome of the communication session 110 can be used to produce coaching instructions based on best practices identified with the machine learning algorithms in the instruction generation device 130. The coaching instructions can be seen as feedback instructions which may help user of the user terminal 400 or an participant of the communication session 110 either to identify in real-time how to improve their communication practices or to use the coaching instructions later on and not in real-time for coaching/training purposes for improving their communication practices. These coaching instructions may include the following. However, the coaching instructions are not limited thereto.

According to an embodiment, the coaching instruction may comprise a security alert if there is a high likelihood of social engineering during the communication session 110 based on the frequency or type of sensitive information data and its timing, frequency, and/or location within the communication session 110. For example, the probability value may be percentage value exceeding a threshold of 50%, 60%, 70% or the like indicating a high likelihood of social engineering. However, the values of the threshold are just an example and not limiting. Any other value for the threshold can be chosen.

According to another embodiment, the coaching instruction may comprise a notification indicating anomalies with regard to the communication session 110 based on the frequency of sensitive information data. The coaching instruction may comprise a step-by-step instruction of how to manage these anomalies. For example, if the anomaly is that the communication session 110 comprises too few sensitive information data, which can be determined using the metadata within the communication data 312, a prompt can be used to remind the user of the user terminal 400 or a participant of the communication session 110 to ask for more sensitive information where required. This may be, for example, useful for a suicide hotline described above where an agent of the suicide hotline needs to ask a specific amount of sensitive information.

According to another embodiment, the coaching instruction may comprise a certainty score showing a certainty that the sensitive information provided during the communication session 110 is accurate. This certainty score may be determined based on the contextual data 325, like location context or metadata. In some cases, the certainty score may be determined based on the emotional state of the participant expressing the sensitive information if used in conjunction with an emotion detection model or based on expected follow-up responses and questions from another participant.

According to another embodiment, the coaching instruction may comprise feedback on performance metrics of a user or participant, wherein the feedback may directly follow in real-time after the disclosure of sensitive information. For example, the feedback may indicate to reassure a customer within the communication session 110 that the personal or private information will be processed according to compliance standards after the customer has disclosed his/her private information.

According to another embodiment, the coaching instruction may comprise feedback regarding the sensitive information processing module 120 and/or the instruction generation device 130 for assurance purposes. Such feedback may help supervisors to know that their sensitive information redaction software running on the sensitive information processing module 120 and/or the instruction generation device 130 is working. It may be important that the sensitive information redaction software works at all time for compliance reasons.

According to another embodiment, the coaching instruction may comprise information about compliance adherence, i.e. whether a user or participant of the communication session 110 is complying with state or company policies during the communication session 110 with reference to the use and management of sensitive information.

According to another embodiment, the coaching instruction may comprise instructions to promote trust for public services that require to use or collect sensitive data. These instructions may be helpful when a customer needs to provide sensitive information to be able to use a service but does not wish to provide the sensitive information due to lack of trust with regard to the government or public services. The instructions may instruct an employee of the government or public services to inform the customer about the amount of sensitive information data that have been queried and collected during the communication session 110. Furthermore, the employee may be instructed to tell the customer what will happen with the collected sensitive information data. This information may be helpful to gain the trust of the customer.

According to another embodiment, for coaching purposes, the instruction 135 may comprise information about how a user or participant responded to sensitive information data, such that the user or participant can improve his/her behaviour in a subsequent communication session.

According to another embodiment, if there is a high frequency of sensitive information during a communication session 110, an instruction or notification may be displayed during the communication session 110 instructing a user or participant to be more sensitive towards the other participant's emotions of having provided too much sensitive information.

According to another embodiment, the coaching instruction may comprise feedback of how many times information during the communication session 110 was classified as sensitive information data. The feedback may be useful to improve both present and future communication sessions between the participants, for example to improve user satisfaction/retention scores and net promoter scores (NPS). The feedback may also indicate that the participants during the communication session 110 are being targeted by a scamming operation or phishing attempt.

As can be seen from the description above, the instruction 135 can function in different ways. The instruction 135 may be provided to the user terminal as notifications, messages, visual nudges, tooltips, action points, battle cards, scorecards, prompts, reminders, alerts, warning signals, audio cues, or the like.

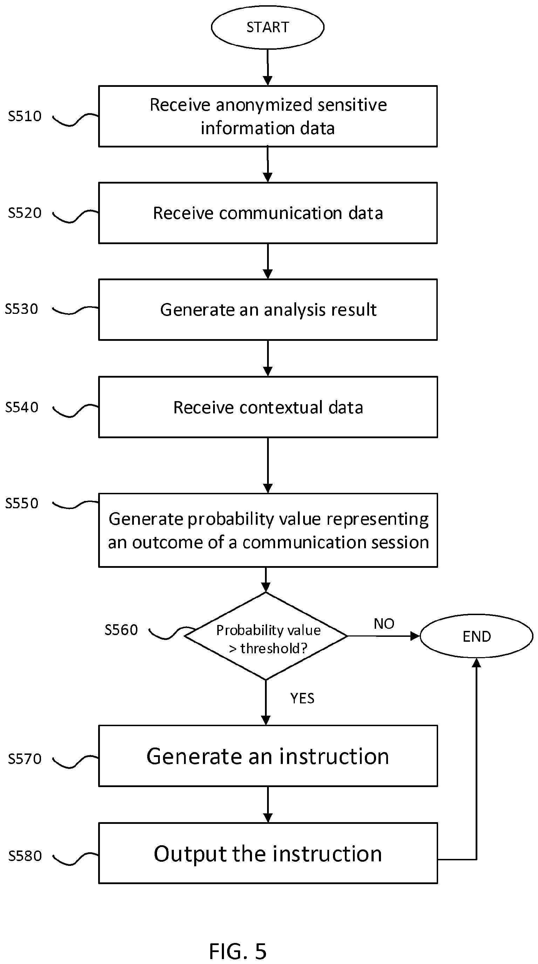

FIG. 5 shows an embodiment of an instruction generation method for generating, in real-time, an instruction concerning a communication session 110 by using anonymized sensitive information data. The instruction generation method may be performed by the instruction generation device described above.

As shown in FIG. 5, the instruction generation method may comprise the step of receiving (S510) anonymized sensitive information data 125, the anonymized sensitive information data 125 being obtained by anonymizing and classifying sensitive information data. As explained above, the sensitive information data may comprise a string of characters representing personal information. Furthermore, the instruction generation method may comprise the step of receiving (S520) communication data 312, the communication data 312 comprising metadata regarding the communication session 110 and/or text data reflecting the content of the communication session 110.

After having received both the anonymized sensitive information data 125 and the communication data 312, the instruction generation method may perform the step of generating (S530) an analysis result 315 by analysing the anonymized sensitive information data 125 with respect to the communication data 312. Details with regard to the analysis have been provided above and are thus omitted at this point for conciseness reasons.

Then, contextual data 325 may be received (S540), wherein the contextual data 325 may provide context to the communication session 110.

As next step, a probability value representing an outcome of the communication session may be generated (S550) using a trained Machine Learning model. In this case, the received analysis result 125 and contextual data 325 may be inputs of the trained Machine Learning model. The trained Machine Learning model has been described in great detail above.

In step S560, the generated probability value is compared to a pre-set threshold. If the generated probability value exceeds the threshold, an instruction may be generated. If the generated probability value does not exceed the threshold, the process may be ended without generating an instruction. However, it is also possible that even if the generated probability value does not exceed the threshold, some kind of feedback is generated and output to provide a user or participant of the communication session 110 that the communication session 110 goes well and no interference is necessary.

If an instruction is generated, the instruction may be outputted (S570), for example, to a user terminal 400 to affect the outcome of the communication session as described above.

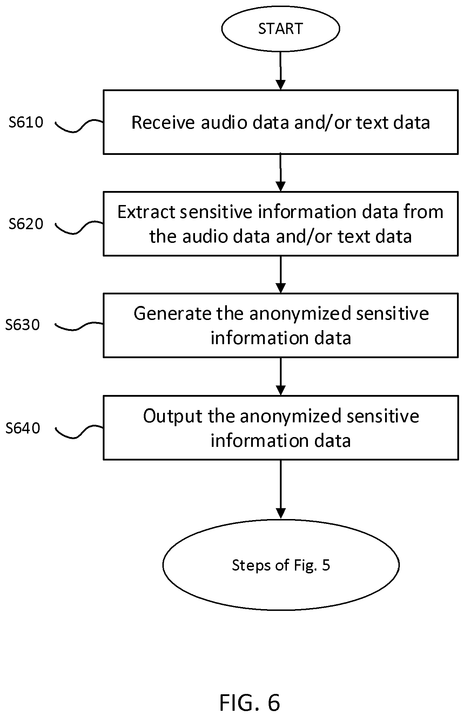

FIG. 6 shows another embodiment of a method executed in a system as, for example, described above for generating, in real-time, an instruction concerning a communication session 110. For generating the instruction, anonymized sensitive information data is used. The method may be performed by the units and modules described in great detail above.

As shown in FIG. 6, the method may perform a step of receiving (S610) audio data and/or text data 115 reflecting the content of the communication session 110.

Once the audio data and/or text data 115 have been received, extracting sensitive information data may be extracted (S620) from the audio data and/or text data 115 and the anonymized sensitive information data 125 may be generated (S630) by anonymizing and classifying the sensitive information data. Then, the anonymized sensitive information data 125 may be output to, for example, the instruction generation device 130. The method illustrated in FIG. 6 may then perform the steps shown in FIG. 5 and performed by the instruction generation device 130. For conciseness reasons, the steps are not repeated at this point.

It is pointed out that the instruction generation device 130 has been described in combination with the sensitive information processing module 120. Both the instruction generation device 130 and the sensitive information processing module 120 may be located in one apparatus or may be located in different apparatuses. In addition, the instruction generation device 130 can be provided in isolation and combined and paired with an existing sensitive information processing module 120. While the instruction generation device 130 and the sensitive information processing module 120 can be used without further units and modules for improving communication sessions, the instruction generation device 130 and the sensitive information processing module 120 can be combined with multiple forms of communication enhancement techniques, including live coaching techniques which use acoustic parameters, guidance on how to answer questions, emotion and sentiment detection, compliance audit models etc. Thus, the present invention can be used in conjunction with other communication improving techniques.

Now, two possible use cases are described as examples to demonstrate how the present invention can be implemented. The first use case is in the field of call centres, while the second use case is directed to government - citizen interaction. The present invention is not limited to the two use case and may be used for any audio or text based communications, i.e. chat support, live messaging or the like via the phone, social media, etc.

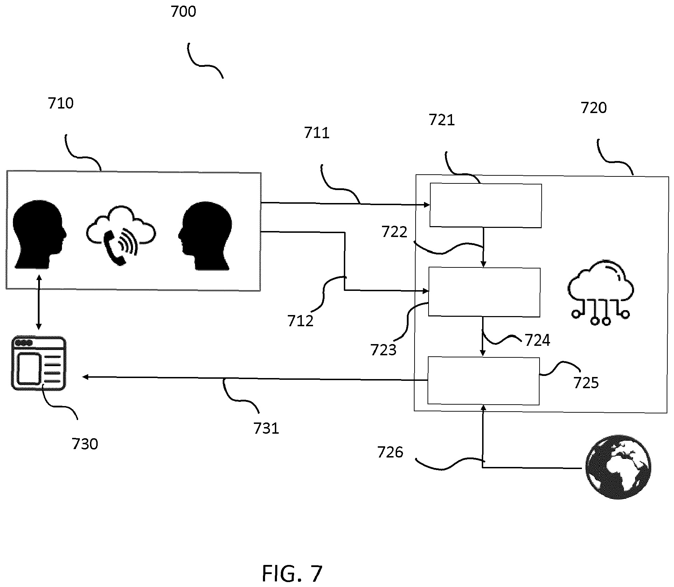

FIG. 7 shows an embodiment of the first use case. This use case describes one of many configurations to use the present invention in a call centre where an agent may be in a live communication session via a VoiP network with a customer.

For example, a company ABC may employ a call centre of 100 agents. In order to optimally manage the call centre, a real-time communication overview is installed where the supervisors of the 100 agents may see the live status of multiple communication sessions 710, like conversations, phone calls, VoIP calls, chats, and the like. Thus, the supervisors are able to monitor and intervene in the communication sessions 710 if required or if a customer asks to escalate an issue to management. The company ABC may use a VoiP system, wherein each agent may have a user interface on his/her computing device 730 that provides information 732 to each agent in real-time based on the communication session 710. The computing device 730 may be the user terminal 400 explained above. This information 732 may include a live transcript, live nudges, live stats including the duration of a communication session 710 and sentiment detection of the customer to help the agent determine whether or not a desired outcome of the communication session 710 is achieved. A desired outcome may be avoiding security breaches, finalizing a sale, or obtaining a high customer satisfaction rating.

A possible scenario for a call centre environment is described below. A customer may be calling company ABC with a request for a new bank card. The call is established via a call centre call distribution system and an agent receives the VoiP communication session 710. The communication session 710 may be similar to a communication session 110 described above. The communication session 710 generates raw audio data 711 (similar to the audio data 115 described above) which is recorded in real-time by a cloud processing device 720. The cloud processing device 720 may be a cloud-based system comprising several units and modules. The units and modules may be the sensitive information processing unit 120, 200 and the instruction generation device 130 described above. The cloud processing device 720 may be located remotely from the call centre or may be facilitated on site depending on the configuration of the communication infrastructure of the call centre.

The raw audio data 711 is received by a sensitive information processing unit 721 within the cloud processing device 720 which is similar to the sensitive information processing unit 120, 200 described above. As the sensitive information processing unit 721 receives raw audio data 711, an automatic speech recognition (ASR) unit, like the ASR unit 210 described above, may be needed in the sensitive information processing unit 721 to further process the audio data into speech-to-text (STT) data. If the sensitive information processing unit 721 receives raw text data instead of audio data, no ASR unit is needed, see the description given above.

The STT data converted by the ASR unit is then used as an input to a text classification unit which may be the text classification unit 220 described above. As an alternative, the STT data may also be routed directly to the user interface of the computing device 730 so that the agent using the computing device 730 receives a live/real-time transcription of the communication session 710. Thus, the agent is able to keep track of the history of the communication session 710.

During the communication session 710, the agent may ask the customer to give his/her private identification number in order to authenticate his/her private details, and to give his/her full name and address. The text classification unit in the sensitive information processing unit is able to identify and classify the responses from the customer as sensitive information data, like private name, ID number and address. Details regarding the identification and classification are given above.

It is possible that company ABC has configured the cloud processing device 720 to work as a training coach and to enhance real-time communication. Thus, the text classification unit may mark the sensitive information data to be recorded by the cloud processing device 720, such that the sensitive information data can be later retrieved for training purposes by a user interface instructor module 725. The user interface instructor module 725 is similar to the user interface instructor module 320 described above. The sensitive information data may also be marked by the agent to train a Machine Learning model within the user interface instructor module 725. The sensitive information data may also be stored in a case where the user interface instructor module 725 outputs a probability value representing a high likelihood of fraudulent activity based on the correlations of metadata, security outcomes, and contextual data from prior communication samples. The recorded sensitive information data may then be analysed by a supervisor or referred to security consultants in a case where the probability value of the security breach passes a threshold of certainty outputted by the Machine Learning model in the user interface instructor module 725.

The text classification unit outputs anonymized sensitive information data 722 by anonymizing, i.e. deleting, the sensitive information within the sensitive information data and adding labels representing classifications of the sensitive information data (three separate events: (1) name, (2) ID Number, and (3) address) to the sensitive informational analysis module 723. The sensitive information analysis module 723 is similar to the sensitive information analysis module 310 described above.

The sensitive information analysis module 723 further receives communication data 712 from the communication session 710, the communication data 712 being similar to the communication data 312 described above. The sensitive information analysis module 723 correlates the anonymized sensitive information data 722 to, for example, metadata of the communication session 710, wherein the metadata is included in the communication data 712. The metadata may be timestamps, duration, and/or location of the communication session 710. In this case, the location of the communication session 710 is derived from the IP address of the customer. The sensitive information analysis module 723 annotates the anonymized sensitive information data 722 with the communication data 712, generate an analysis result 724 (see description above), and may relay the analysis result 724 directly to the agent via the user interface of the computing device 730 to be displayed in conjunction with the live transcription. Furthermore, the sensitive information analysis module 723 transmits the analysis result 724 to the user interface instructor module 725. By displaying the analysis result together with the live transcription, the agent is able to see that sensitive information data appeared in the communication session 710 and where the sensitive information data occurred in the transcript. However, the analysis result is based on the anonymized sensitive information data. Thus, the agent only sees anonymized sensitive information data to fulfil compliance policies.

The analysis result 724 is used as an input to the user interface instructor module 725. Furthermore, the user interface instructor module 725 receives contextual data 726 which are similar to the contextual data 325 described above. In this case, the contextual data 726 comprises data regarding compliance policies and emotion data obtained by an emotion detection model. The emotion data may reflect the emotional state of the customer. Combined with the analysis result 724, the IP address of the customer can be compared with the address provided in the customer's details in a CRM database. If the IP address does not match the address stored in the CRM database, a warning or alert may be generated to use as a potential security flag. The CRM database is a database which keeps track and stores information on all customers.

The contextual data 726 may be fed into the Machine Learning model in the user interface instructor module 725, said Machine Learning model being trained on similar data from prior communication samples. Weights with regard to the Machine Learning model may decide how much value or emphasis to give to input data, the input data comprising the contextual data 726. The weights may decide how much influence input data have on results output by the Machine Learning model. The Machine Learning model can be trained to give more weight when the Machine Leaning model sees certain input data, for example like asking for a bank pin which should not happen. When the Machine Learning model sees this, i.e. receives such input data, this specific input data may have a big impact on the outcome because of the weights. A certainty score may be attributed to the sensitive information pertaining to whether sensitive information given by the customer is accurate and authentic. Additionally, as another alternate configuration of the invention, the user interface instructor module 725 may also observe acoustic features of the call, with attention given to the expression of sensitive information, and the immediate time intervals before and after the sensitive information is expressed by the customer. Thus, a probability of authenticity can be output based on emotional attributes of the customer's acoustic characteristics. For instance, in previous communication samples the user interface instructor module 725 may have determined that anger following a disclosure of private or sensitive information may be correlated to a non-desirable call outcome. Thus, the user interface instructor module 725 may flag this moment for the agent to see on their computing device 730 as a potential problem area to focus on. A nudge may be programmed to display on the agent's computing device 730 correlated with anger following a sensitive information data. This nudge may prompt the agent to take some action to calm down the customer by telling the customer what will happen to his/her sensitive information.

Additionally, the sensitive information may be annotated to the call timing and stored for a supervisor to pick up and use as training material. If the agent managed the sensitive information disclosed by the customer well, the supervisor may use this recorded communication sample as a demonstration for how to appease customers who become angry after disclosing private or sensitive information.

As there may be numerous communication sessions running in parallel, the supervisor may receive an alert from the user interface instructor module 725 if one of the agents in the call centre is not responding well to sensitive information disclosures. In that case, the supervisor may intervene on a call that had flagged poor management of sensitive information, either for compliance reasons or for customer satisfaction reasons.

It is also noted that the agent may receive an instruction 731 which is similar to the instruction 135 described above. The instruction 731 may be the output to the computing terminal 730 which displays the instruction 135 to the agent. How an instruction is generated is explained in detail above. The instruction 731 may, for example, instruct the agent to end the communication session 710 to avoid security breaches. However, it is also possible that the computing device 730 is able to automatically end the communication session 710 when receiving the instruction 731 without having to wait for the agent.

Now, another possible use case is described below. This use case is directed to government - citizen interaction. In addition to the outcomes demonstrated in the above call centre use case, modules and units described above can be used to generate trust necessary for modern governments to successfully execute their administrative policies and interface with citizens.

Executive functioning of a government depends on the seamless progress of administrative tasks like collecting tax data, performing demographic research, confirming employment status, etc. In each of these cases, sensitive information from the citizen is required to be disclosed, to maintain the responsibilities of a well-functioning executive branch of government.

In some cases, government departments outsource interactions with citizens to third parties. In these cases, the third party call centre service providers may need to be monitored by their government department clients to act in accordance with the government department policies on the management of sensitive information disclosed by citizens for administrative purposes. They need to instil a sense of continued trust and credibility from the citizens in order to maintain their compliance with disclosing sensitive information for the continued progress of civil order.

Whoever is responsible for interacting with citizens on behalf of a government department, may need to act in compliance with policies for handling sensitive information and making citizens feel confident that their sensitive information is being handled responsibly. Government departments need to provide oversight on how citizens are interacting with their representatives. In such arrangements, a compliance monitoring device may be used which employs an ASR unit as described above and a module for monitoring in real-time if checklists have been complied with. For instance, a checklist provided by a government department to their representatives may include the tasks of gathering the citizen's name, tax ID number, address, and pin code; disclosing policy on handling of sensitive information; mentioning that the call may be recorded for training purposes, etc.

In cases where a third party has set-up a speech monitoring tool to ensure the compliance of a checklist provided to them by the policy requirements of a government department, the speech monitoring tool is usually limited to ensuring that certain words have been said during the conversation. If these certain words have not been said, the speech monitoring tool may remind the representative to fulfil the policy requirements.

However, the prior art in this case lacks in being able to confirm how the citizen is responding to disclosing information during a call with a government representative. Ensuring that a checklist of policy requirements is fulfilled does not necessarily imply that a citizen feels like trust was established after disclosing his/her sensitive information and that the sensitive information is safe. Reading off a policy verbatim that "your sensitive data will be managed according to the corresponding act of a government legislation section X" can be received as a robotic and meaningless gesture offered by the government representative. To ensure the continued compliance of citizens and government representatives, it is essential that citizens feel like their sensitive information is being managed properly. The citizens should not feel like they are just treated as a number in a system and should not have the feeling that excerpts are just read from a policy checklist.

By providing a system and instruction generation device as disclosed herein, this trust sentiment between a citizen and a government representative can be more firmly established. In addition to having a checklist fulfilment criteria and ASR unit ensuring the compliance of said checklist, the system and instruction generation device disclosed here can count the frequency of the disclosure of sensitive information by a citizen, and correlate contextual events and data of said disclosure of sensitive information, to determine if a citizen feels comfortable disclosing said sensitive information and confident that it is being managed properly. This is ensured even though the sensitive information data needs to be anonymized.

In this use case, contextual events and data may include the sentiment of the government representative and citizen before and after the disclosure of sensitive information. In the case where a citizen communicates some hesitation or mistrust, an instruction or notification can pop-up on the representative's computing device or user terminal to take additional steps to ensure the citizen is confident that his/her sensitive information is necessary to disclose, and that his/her information is safe and secured.

It is also possible to measure and determine the frequency of sensitive information disclosure from a citizen within a communication session, like a call, to display the measured and determined frequency at the end of the communication session to the representative as a notification. This notification can then be used by the representative to promote trust with the citizen, i.e. the representative could then say "you have disclosed x number of private details, including your tax number, name, address and pin code; we have removed these details from the recorded transcript". The use of such an expression of how many private details were disclosed during the call can increase the sense of personalisation and empathy that the citizen feels with the government representative, ensuring future compliance of the citizen. Nowadays, where privacy compliance and suspicion about what institutions are doing with private citizen data exist, the need for comforting and being transparent with said private information is in more demand than ever.

## Claims

1. An instruction generation device for generating, in real-time, an instruction concerning a communication session by using anonymized sensitive information data, the instruction generation device comprising:
a sensitive information analysis module configured to:
- receive the anonymized sensitive information data,
- receive communication data, the communication data comprising metadata regarding the communication session and/or text data reflecting the content of the communication session,
- generate an analysis result by analysing the anonymized sensitive information data with respect to the communication data, and to output the analysis result; and
a user interface instructor module comprising a trained Machine Learning model, the user interface instructor module being configured to:
- receive the analysis result from the sensitive information analysis module,
- receive contextual data, the contextual data providing context to the communication session,
- generate a probability value representing an outcome of the communication session using the trained Machine Learning model, the analysis result and the contextual data being inputs of the trained Machine Learning model,
- generate the instruction when the generated probability value exceeds a threshold, and
- output the generated instruction to affect the outcome of the communication session;
wherein the sensitive information analysis module is further configured to:
- compare the anonymized sensitive information data with the communication data; and
- determine a time when the anonymized sensitive information data occurred within the communication session by using timestamps included in the communication data, count a total amount of the anonymized sensitive information data found in the communication data, count an amount of the anonymized sensitive information data for a particular classification of sensitive information data, the anonymized sensitive information data being found in the communication data, and/or determine a duration of the anonymized sensitive information data by using the timestamps included in the communication data.

2. The instruction generation device according to claim 1, wherein the personal information comprises a personal name, personal details, an age, an address, an e-mail address, a personal identification number, a telephone number, or bank account details.

3. The instruction generation device according to any one of claims 1 or 2, wherein the analysis result comprises a timestamp of when the anonymized sensitive information data occurred in the communication session, a first value representing a total amount of the anonymized sensitive information data that occurred throughout the communication session, a second value representing an amount of the anonymized sensitive information data for a particular classification of sensitive information data that occurred throughout the communication session, and/or a third value representing a duration of the anonymized sensitive information data.

4. The instruction generation device according to any one of claims 1 to 3, wherein the contextual data represents data from outside of the communication session and comprises communication metadata including location and/or duration of the communication session; information on at least one participant of the communication session; local time of the at least one participant of the communication session; best practice communication standards; compliance requirements; data on previous communication sessions; voice volume of the at least one participant of the communication session; and/or speed at which the at least one participant of the communication speech is communicating.

5. The instruction generation device according to any one of claims 1 to 4,
wherein the contextual data comprises vocal pitch of the at least one participant of the communication session, the vocal pitch being a sequence per every token of floating-point numbers of variable length and being extracted from audio data of the communication session, and
wherein the trained Machine Learning model optionally utilizes pitch embedding as one of its layers which uses the vocal pitch as input from an analysis module.

6. The instruction generation device according to any one of claims 1 to 5, wherein the trained Machine Learning model utilizes linear mapping.

7. The instruction generation device according to any one of claims 1 to 6,
wherein the contextual data comprises an emotional state of the at least one participant of the communication session, the emotional state being obtained by extracting an emotion, related to the at least one participant, from audio data of the communication session and converting the emotion to a sequence of integers using an analysis module, and
wherein the analysis module is optionally an emotion detection module, acoustic module, and/or biometric voiceprint model.

8. The instruction generation device according to claim 7,
wherein the analysis module is configured to extract the emotion from a voice of the at least one participant, and
wherein the analysis module is further optionally configured to analyse pitch, timbre, volume, speech rate, voice intensity, rhythm of speech, pauses, and/or articulation in the voice and determine the emotion based on the analysis.

9. The instruction generation device according to claim 7 or 8, wherein the trained Machine Learning model utilizes emotion embedding as one of its layers which uses the emotional state as an input from the analysis module.

10. The instruction generation device according to any one of claims 1 to 9, wherein the trained Machine Learning model is a transformer model or a bidirectional encoder representation model.

11. The instruction generation device according to any one of claims 1 to 10, wherein the user interface instructor module is further configured to generate a database storing a correlation between the analysis result, the contextual data, and the probability value representing the outcome of the communication session in order to compare a plurality of communication sessions and output a probability distribution of an outcome of a subsequent communication session.

12. The instruction generation device according to any one of claims 1 to 11, wherein the generated instruction instructs a participant of the communication session or a user terminal which is used within the communication session to end the communication session when the generated probability value exceeding the threshold represents a security breach.

13. A system for generating, in real-time, an instruction concerning a communication session by using anonymized sensitive information data, the system comprising:
a sensitive information processing module configured to:
- receive audio data and/or text data reflecting the content of the communication session,
- extract sensitive information data from the audio data and/or text data,
- generate the anonymized sensitive information data by anonymizing and classifying the sensitive information data, and
- output the anonymized sensitive information data; and
the instruction generation device according to any one of claims 1 to 12.

14. The system according to claim 13, wherein the sensitive information processing module comprises an automatic speech recognition, ASR, unit configured to convert the audio data to text data reflecting the content of the communication session.

15. The system according to claim 13 or 14,
wherein the sensitive information processing module comprises a text classification unit for extracting the sensitive information data and generating the anonymized sensitive information data, wherein the text classification unit is configured to identify and extract a specific string of characters within the text data reflecting the content of the communication session as the sensitive information data, to classify the personal information within the sensitive information data by determining the type of personal information, and to generate the anonymized sensitive information data by removing, for anonymization, the personal information from the sensitive information data and adding, for classification, a label representing the classification of the personal information,
wherein the sensitive information processing unit further optionally comprises a text data formatting unit configured to format the text data into a text data format required by the text classification unit, wherein the text classification unit uses the formatted text data for extracting the sensitive information data and generating the anonymized sensitive information data.

16. The system according to any one of claims 13 to 15, further comprising a user terminal configured to provide a user interface, wherein the user terminal is configured to receive the instruction from the instruction generation device and to output the instruction to a user,
wherein the sensitive information analysis module is optionally configured to transmit the analysis result to the user terminal, and
the user terminal is further optionally configured to display the analysis result.

17. The system according to claim 16, wherein
in response to the received instruction, the user terminal is configured to flag the communication session and is further configured to:
store and route the flagged communication session to a training database; or
store, duplicate, and encrypt the flagged the communication session, and route the encrypted communication session to another user terminal.

18. An instruction generation method for generating, in real-time, an instruction concerning a communication session by using anonymized sensitive information data, the instruction generation method comprising the steps of:
- receiving the anonymized sensitive information data;
- receiving communication data, the communication data comprising metadata regarding the communication session and/or text data reflecting the content of the communication session;
- generating an analysis result by analysing the anonymized sensitive information data with respect to the communication data;
- receiving contextual data, the contextual data providing context to the communication session,
- generating a probability value representing an outcome of the communication session using a trained Machine Learning model, the analysis result and the contextual data being inputs of the trained Machine Learning model;
- generating the instruction when the generated probability value exceeds a threshold; and
- outputting the generated instruction to affect the outcome of the communication session;
wherein the instruction generation method further comprises the steps of:
- comparing the anonymized sensitive information data with the communication data; and
- determining a time when the anonymized sensitive information data occurred within the communication session by using timestamps included in the communication data, counting a total amount of the anonymized sensitive information data found in the communication data, counting an amount of the anonymized sensitive information data for a particular classification of sensitive information data, the anonymized sensitive information data being found in the communication data, and/or determining a duration of the anonymized sensitive information data by using the timestamps included in the communication data.

19. A method executed in a system for generating, in real-time, an instruction concerning a communication session by using anonymized sensitive information data, the method comprising the steps of:
- receiving audio data and/or text data reflecting the content of the communication session;
- extracting sensitive information data from the audio data and/or text data;
- generating the anonymized sensitive information data by anonymizing and classifying the sensitive information data; and
- outputting the anonymized sensitive information data;
wherein the method further comprises the steps according to claim 18.

## Patentansprüche

1. Anweisungserzeugungsvorrichtung zum Erzeugen einer Anweisung in Echtzeit, die eine Kommunikationssitzung betrifft, indem anonymisierte sensible Informationsdaten verwendet werden, wobei die Anweisungserzeugungsvorrichtung folgendes umfasst:
ein Analysemodul für sensible Informationen, das konfiguriert ist, um:
- die anonymisierten sensiblen Informationsdaten zu empfangen,
- Kommunikationsdaten zu empfangen, wobei die Kommunikationsdaten Metadaten betreffend die Kommunikationssitzung und/oder Textdaten umfassen, die den Inhalt der Kommunikationssitzung reflektieren,
- ein Analyseergebnis zu erzeugen, indem die anonymisierten sensiblen Informationsdaten in Bezug auf die Kommunikationsdaten analysiert werden, und das Analyseergebnis auszugeben; und
ein Benutzerschnittstellen-Trainermodul, das ein trainiertes Machine Learning-Modell umfasst, wobei das Benutzerschnittstellen-Trainermodul konfiguriert ist, um:
- das Analyseergebnis von dem Analysemodul für sensible Informationen zu empfangen,
- kontextbezogene Daten zu empfangen, wobei die kontextbezogenen Daten einen Kontext für die Kommunikationssitzung bereitstellen,
- einen Wahrscheinlichkeitswert zu erzeugen, der ein Ergebnis der Kommunikationssitzung repräsentiert, indem das trainierte Machine Learning-Modell verwendet wird, wobei das Analyseergebnis und die kontextbezogenen Daten Eingaben des trainierten Machine Learning-Modells sind,
- die Anweisung zu erzeugen, wenn der erzeugte Wahrscheinlichkeitswert einen Schwellenwert überschreitet, und
- die erzeugte Anweisung auszugeben, um das Ergebnis der Kommunikationssitzung zu beeinflussen;
wobei das Analysemodul für sensible Informationen weiter konfiguriert ist, um:
- die anonymisierten sensiblen Informationsdaten mit den Kommunikationsdaten zu vergleichen; und
- einen Zeitpunkt zu bestimmen, wenn die anonymisierten sensiblen Informationsdaten innerhalb der Kommunikationssitzung aufgetreten sind, indem in den Kommunikationsdaten eingeschlossene Zeitstempel verwendet werden, eine Gesamtmenge der in den Kommunikationsdaten gefundenen anonymisierten sensiblen Informationsdaten zu zählen, eine Menge der anonymisierten sensiblen Informationsdaten für eine bestimmte Klassifizierung von sensiblen Informationsdaten zählen, wobei die anonymisierten sensiblen Informationsdaten in den Kommunikationsdaten gefunden werden, und/oder eine Dauer der anonymisierten sensiblen Informationsdaten bestimmen, indem die in den Kommunikationsdaten eingeschlossenen Zeitstempel verwendet werden.

2. Anweisungserzeugungsvorrichtung nach Anspruch 1, wobei die persönlichen Informationen einen persönlichen Namen, persönliche Details, ein Alter, eine Adresse, eine E-Mail-Adresse, eine persönliche Identifikationsnummer, eine Telefonnummer oder Bankkontodetails umfassen.

3. Anweisungserzeugungsvorrichtung nach einem der Ansprüche 1 oder 2, wobei das Analyseergebnis folgendes umfasst, einen Zeitstempel darüber, wann die anonymisierten sensiblen Informationsdaten in der Kommunikationssitzung aufgetreten sind, einen ersten Wert, der eine Gesamtmenge der anonymisierten sensiblen Informationsdaten repräsentiert, die während der gesamten Kommunikationssitzung aufgetreten sind, einen zweiten Wert, der eine Menge der anonymisierten sensiblen Informationsdaten für eine bestimmte Klassifizierung sensibler Informationsdaten repräsentiert, die während der Kommunikationssitzung aufgetreten sind, und/oder einen dritten Wert, der eine Dauer der anonymisierten sensiblen Informationsdaten repräsentiert.

4. Anweisungserzeugungsvorrichtung nach einem der Ansprüche 1 bis 3, wobei die kontextbezogenen Daten Daten von außerhalb der Kommunikationssitzung repräsentieren und Kommunikationsmetadaten umfassen, die den Ort und/oder die Dauer der Kommunikationssitzung einschließen; Informationen über mindestens einen Teilnehmer der Kommunikationssitzung; die Ortszeit des mindestens einen Teilnehmers der Kommunikationssitzung; Best-Practice-Kommunikationsstandards; Compliance-Anforderungen; Daten über frühere Kommunikationssitzungen; Stimmlautstärke des mindestens einen Teilnehmers der Kommunikationssitzung; und/oder Geschwindigkeit, mit der der mindestens eine Teilnehmer der Kommunikationssprache kommuniziert.

5. Anweisungserzeugungsvorrichtung nach einem der Ansprüche 1 bis 4,
wobei die kontextbezogenen Daten die Stimmlage des mindestens einen Teilnehmers der Kommunikationssitzung umfassen, wobei die Stimmlage eine Sequenz von Gleitkommazahlen variabler Länge für jedes Token ist und aus den Audiodaten der Kommunikationssitzung extrahiert wird, und
wobei das trainierte Machine Learning-Modell optional Lageneinbettung als eine seiner Schichten verwendet, die die Stimmlage als Eingabe von einem Analysemodul verwendet.

6. Anweisungserzeugungsvorrichtung nach einem der Ansprüche 1 bis 5, wobei das trainierte Machine Learning-Modell eine lineare Abbildung nutzt.

7. Anweisungserzeugungsvorrichtung nach einem der Ansprüche 1 bis 6,
wobei die kontextbezogenen Daten einen emotionalen Zustand des mindestens einen Teilnehmers der Kommunikationssitzung umfassen, wobei der emotionale Zustand durch Extrahieren einer Emotion, die den mindestens einen Teilnehmer betrifft, aus den Audiodaten der Kommunikationssitzung und durch Konvertieren der Emotion in eine Sequenz von Ganzzahlen, indem ein Analysemodul verwendet wird, erhalten wird, und
wobei das Analysemodul optional ein Emotionserfassungsmodul, ein akustisches Modul und/oder ein biometrisches Stimmabdruckmodell ist.

8. Anweisungserzeugungsvorrichtung nach Anspruch 7,
wobei das Analysemodul konfiguriert ist, um die Emotion aus einer Stimme des mindestens einen Teilnehmers zu extrahieren, und
wobei das Analysemodul weiter optional konfiguriert ist, um die Lage, das Timbre, die Lautstärke, die Sprechgeschwindigkeit, die Stimmintensität, den Rhythmus der Sprache, die Pausen und/oder die Artikulation in der Stimme zu analysieren und die Emotion basierend auf der Analyse zu bestimmen.

9. Anweisungserzeugungsvorrichtung nach Anspruch 7 oder 8, wobei das trainierte Machine Learning-Modell Emotionseinbettung als eine seiner Schichten nutzt, die den emotionalen Zustand als eine Eingabe vom Analysemodul verwendet.

10. Anweisungserzeugungsvorrichtung nach einem der Ansprüche 1 bis 9, wobei das trainierte Machine Learning-Modell ein Transformermodell oder ein bidirektionales Encoder-Repräsentationsmodell ist.

11. Anweisungserzeugungsvorrichtung nach einem der Ansprüche 1 bis 10, wobei das Benutzerschnittstellen-Trainermodul weiter konfiguriert ist, um eine Datenbank zu erzeugen, die eine Korrelation zwischen dem Analyseergebnis, den kontextbezogenen Daten und dem Wahrscheinlichkeitswert, der das Ergebnis der Kommunikationssitzung repräsentiert, speichert, um eine Vielzahl von Kommunikationssitzungen zu vergleichen und eine Wahrscheinlichkeitsverteilung eines Ergebnisses einer nachfolgenden Kommunikationssitzung auszugeben.

12. Anweisungserzeugungsvorrichtung nach einem der Ansprüche 1 bis 11, wobei die erzeugte Anweisung einen Teilnehmer der Kommunikationssitzung oder ein Benutzerendgerät, das innerhalb der Kommunikationssitzung verwendet wird, anweist, die Kommunikationssitzung zu beenden, wenn der erzeugte Wahrscheinlichkeitswert, der den Schwellenwert überschreitet, eine Sicherheitsverletzung repräsentiert.

13. System zum Erzeugen einer Anweisung in Echtzeit, die eine Kommunikationssitzung betrifft, indem anonymisierte sensible Informationsdaten verwendet werden, wobei das System folgendes umfasst:
ein Verarbeitungsmodul für sensible Informationen, das konfiguriert ist, um:
- Audiodaten und/oder Textdaten zu empfangen, die den Inhalt der Kommunikationssitzung reflektieren,
- sensible Informationsdaten aus den Audiodaten und/oder Textdaten zu extrahieren,
- die anonymisierten sensiblen Informationsdaten durch Anonymisieren und Klassifizieren der sensiblen Informationsdaten zu erzeugen, und
- die anonymisierten sensiblen Informationsdaten auszugeben; und
die Anweisungserzeugungsvorrichtung nach einem der Ansprüche 1 bis 12.

14. System nach Anspruch 13, wobei das Verarbeitungsmodul für sensible Informationen eine Einheit zur automatischen Spracherkennung, ASR, umfasst, die konfiguriert ist, um die Audiodaten in Textdaten zu konvertieren, die den Inhalt der Kommunikationssitzung reflektieren.

15. System nach Anspruch 13 oder 14,
wobei das Verarbeitungsmodul für sensible Informationen eine Textklassifizierungseinheit zum Extrahieren der sensiblen Informationsdaten und zum Erzeugen der anonymisierten sensiblen Informationsdaten umfasst, wobei die Textklassifizierungseinheit konfiguriert ist, um eine spezifische Zeichenkette innerhalb der Textdaten, die den Inhalt der Kommunikationssitzung reflektieren, als die sensiblen Informationsdaten zu identifizieren und zu extrahieren, um die persönlichen Informationen innerhalb der sensiblen Informationsdaten zu klassifizieren, indem der Typ der persönlichen Informationen bestimmt wird, und um die anonymisierten sensiblen Informationsdaten zu erzeugen, indem die persönlichen Informationen zur Anonymisierung aus den sensiblen Informationsdaten entfernt werden und zur Klassifizierung ein Etikett hinzufügt wird, das die Klassifizierung der persönlichen Informationen repräsentiert,
wobei die Verarbeitungseinheit für sensible Informationen weiter optional eine Textdatenformatierungseinheit umfasst, die konfiguriert ist, um die Textdaten in ein Textdatenformat zu formatieren, das von der Textklassifizierungseinheit benötigt wird, wobei die Textklassifizierungseinheit die formatierten Textdaten zum Extrahieren der sensiblen Informationsdaten und zum Erzeugen der anonymisierten sensiblen Informationsdaten verwendet.

16. System nach einem der Ansprüche 13 bis 15, weiter umfassend ein Benutzerendgerät, das konfiguriert ist, um eine Benutzeroberfläche bereitzustellen, wobei das Benutzerendgerät konfiguriert ist, um die Anweisung von der Anweisungserzeugungsvorrichtung zu empfangen und die Anweisung an einen Benutzer auszugeben,
wobei das Analysemodul für sensible Informationen optional konfiguriert ist, um das Analyseergebnis an das Benutzerendgerät zu übertragen, und
das Benutzerendgerät weiter optional konfiguriert ist, um das Analyseergebnis anzuzeigen.

17. System nach Anspruch 16, wobei
das Benutzerendgerät als Reaktion auf die empfangene Anweisung konfiguriert ist, um die Kommunikationssitzung zu markieren, und weiter konfiguriert ist, um:
die markierte Kommunikationssitzung zu speichern und an eine Trainingsdatenbank weiterzuleiten; oder
die markierte Kommunikationssitzung zu speichern, zu duplizieren und zu verschlüsseln und die verschlüsselte Kommunikationssitzung an ein anderes Benutzerendgerät weiterzuleiten.

18. Anweisungserzeugungsverfahren zum Erzeugen einer Anweisung in Echtzeit, die eine Kommunikationssitzung betrifft, indem anonymisierte sensible Informationsdaten verwendet werden, wobei das Anweisungserzeugungsverfahren die folgenden Schritte umfasst:
- Empfangen der anonymisierten sensiblen Informationsdaten;
- Empfangen von Kommunikationsdaten, wobei die Kommunikationsdaten Metadaten betreffend die Kommunikationssitzung und/oder Textdaten umfassen, die den Inhalt der Kommunikationssitzung reflektieren;
- Erzeugen eines Analyseergebnisses durch Analysieren der anonymisierten sensiblen Informationsdaten in Bezug auf die Kommunikationsdaten;
- Empfangen von kontextbezogenen Daten, wobei die kontextbezogenen Daten einen Kontext für die Kommunikationssitzung bereitstellen,
- Erzeugen eines Wahrscheinlichkeitswerts, der ein Ergebnis der Kommunikationssitzung repräsentiert, indem ein trainiertes Machine Learning-Modell verwendet wird, wobei das Analyseergebnis und die kontextbezogenen Daten Eingaben des trainierten Machine Learning-Modells sind;
- Erzeugen der Anweisung, wenn der erzeugte Wahrscheinlichkeitswert einen Schwellenwert überschreitet; und
- Ausgeben der erzeugten Anweisung, um das Ergebnis der Kommunikationssitzung zu beeinflussen;
wobei das Anweisungserzeugungsverfahren weiter die folgenden Schritte umfasst:
- Vergleichen der anonymisierten sensiblen Informationsdaten mit den Kommunikationsdaten; und
- Bestimmen eines Zeitpunkts, wenn die anonymisierten sensiblen Informationsdaten innerhalb der Kommunikationssitzung aufgetreten sind, indem Zeitstempel verwendet werden, die in den Kommunikationsdaten eingeschlossen sind, Zählen einer Gesamtmenge der anonymisierten sensiblen Informationsdaten, die in den Kommunikationsdaten gefunden wurden, Zählen einer Menge der anonymisierten sensiblen Informationsdaten für eine bestimmte Klassifizierung von sensiblen Informationsdaten, wobei die anonymisierten sensiblen Informationsdaten in den Kommunikationsdaten gefunden wurden, und/oder Bestimmen einer Dauer der anonymisierten sensiblen Informationsdaten, indem die in den Kommunikationsdaten eingeschlossenen Zeitstempel verwendet werden.

19. Verfahren, das in einem System zum Erzeugen einer Anweisung in Echtzeit ausgeführt wird, die eine Kommunikationssitzung betrifft, indem anonymisierte sensible Informationsdaten verwendet werden, wobei das Verfahren die folgenden Schritte umfasst:
- Empfang von Audiodaten und/oder Textdaten, die den Inhalt der Kommunikationssitzung reflektieren;
- Extrahieren sensibler Informationsdaten aus den Audiodaten und/oder Textdaten;
- Erzeugen der anonymisierten sensiblen Informationsdaten durch Anonymisieren und Klassifizieren der sensiblen Informationsdaten; und
- Ausgeben der anonymisierten sensiblen Informationsdaten;
wobei das Verfahren weiter die Schritte nach Anspruch 18 umfasst.

## Revendications

1. Dispositif de génération d'instruction pour générer, en temps réel, une instruction concernant une session de communication en utilisant des données d'informations sensibles anonymisées, le dispositif de génération d'instruction comprenant :
un module d'analyse d'informations sensibles configuré pour :
- recevoir les données d'informations sensibles anonymisées,
- recevoir des données de communication, les données de communication comprenant des métadonnées relatives à la session de communication et/ou des données textuelles reflétant le contenu de la session de communication,
- générer un résultat d'analyse par analyse des données d'informations sensibles anonymisées par rapport aux données de communication, et délivrer en sortie le résultat d'analyse ; et
un module instructeur d'interface utilisateur comprenant un modèle d'apprentissage automatique entrainé, le module instructeur d'interface utilisateur étant configuré pour :
- recevoir le résultat d'analyse en provenance du module d'analyse d'informations sensibles,
- recevoir des données contextuelles, les données contextuelles fournissant un contexte à la session de communication,
- générer une valeur de probabilité représentant un dénouement de la session de communication en utilisant le modèle d'apprentissage automatique entrainé, le résultat d'analyse et les données contextuelles étant des entrées du modèle d'apprentissage automatique entrainé,
- générer l'instruction lorsque la valeur de probabilité générée dépasse un seuil, et
- délivrer en sortie l'instruction générée pour influer sur le dénouement de la session de communication ;
dans lequel le module d'analyse d'informations sensibles est en outre configuré pour :
- comparer les données d'informations sensibles anonymisées avec les données de communication ; et
- déterminer un moment où sont apparues les données d'informations sensibles anonymisées au cours de la session de communication en utilisant des horodatages inclus dans les données de communication, compter une quantité totale des données d'informations sensibles anonymisées trouvées dans les données de communication, compter une quantité des données d'informations sensibles anonymisées pour une classification particulière de données d'informations sensibles, les données d'informations sensibles anonymisées étant trouvées dans les données de communication, et/ou déterminer une durée des données d'informations sensibles anonymisées en utilisant les horodatages inclus dans les données de communication.

2. Dispositif de génération d'instruction selon la revendication 1, dans lequel les informations personnelles comprennent un nom personnel, des détails personnels, un âge, une adresse, une adresse électronique, un numéro d'identification personnel, un numéro de téléphone, ou des détails de compte bancaire.

3. Dispositif de génération d'instruction selon l'une quelconque de la revendication 1 ou la revendication 2, dans lequel le résultat d'analyse comprend un horodatage du moment où sont apparues les données d'informations sensibles anonymisées dans la session de communication, une première valeur représentant une quantité totale de données d'informations sensibles anonymisées qui sont apparues au cours de la session de communication, une deuxième valeur représentant une quantité des données d'informations sensibles anonymisées pour une classification particulière de données d'informations sensibles qui sont apparues au cours de la session de communication, et/ou une troisième valeur représentant une durée des données d'informations sensibles anonymisées.

4. Dispositif de génération d'instruction selon l'une quelconque des revendications 1 à 3, dans lequel les données contextuelles représentent des données provenant de l'extérieur de la session de communication et comprennent des métadonnées de communication incluant un lieu et/ou une durée de la session de communication ; des informations sur au moins un participant de la session de communication ; une heure locale de l'au moins un participant de la session de communication ; des normes de bonnes pratiques de communication ; des exigences de conformité ; des données sur des sessions de communication précédentes ; un volume de voix de l'au moins un participant de la session de communication ; et/ou une vitesse à laquelle communique l'au moins un participant de l'intervention de communication.

5. Dispositif de génération d'instruction selon l'une quelconque des revendications 1 à 4,
dans lequel les données contextuelles comprennent une hauteur de voix de l'au moins un participant de la session de communication, la hauteur de voix étant une séquence pour chaque entité de nombres à virgule flottante de longueur variable et étant extraite de données audio de la session de communication, et
dans lequel le modèle d'apprentissage automatique entrainé utilise facultativement une intégration de hauteur comme l'une de ses couches qui utilise la hauteur de voix en tant qu'entrée en provenance d'un module d'analyse.

6. Dispositif de génération d'instruction selon l'une quelconque des revendications 1 à 5, dans lequel le modèle d'apprentissage automatique entrainé utilise un mappage linéaire.

7. Dispositif de génération d'instruction selon l'une quelconque des revendications 1 à 6,
dans lequel les données contextuelles comprennent un état émotionnel de l'au moins un participant de la session de communication, l'état émotionnel étant obtenu par extraction d'une émotion, liée à l'au moins un participant, à partir des données audio de la session de communication et conversion de l'émotion en une séquence d'entiers en utilisant un module d'analyse, et
dans lequel le module d'analyse est facultativement un module de détection d'émotion, un module acoustique, et/ou un modèle d'empreinte vocale biométrique.

8. Dispositif de génération d'instruction selon la revendication 7,
dans lequel le module d'analyse est configuré pour extraire l'émotion d'une voix de l'au moins un participant, et
dans lequel le module d'analyse est en outre facultativement configuré pour analyser une hauteur, un ton, un volume, une vitesse de parole, une intensité de voix, un rythme de parole, des pauses, et/ou une articulation de la voix et déterminer l'émotion sur la base de l'analyse.

9. Dispositif de génération d'instruction selon la revendication 7 ou la revendication 8, dans lequel le modèle d'apprentissage automatique entrainé utilise une intégration d'émotion comme l'une de ses couches qui utilise l'état émotionnel en tant qu'entrée provenant du module d'analyse.

10. Dispositif de génération d'instruction selon l'une quelconque des revendications 1 à 9, dans lequel le modèle d'apprentissage automatique entrainé est un modèle de transformateur ou un modèle de représentation de codeur bidirectionnel.

11. Dispositif de génération d'instruction selon l'une quelconque des revendications 1 à 10, dans lequel le module instructeur d'interface utilisateur est en outre configuré pour générer une base de données stockant une corrélation entre le résultat d'analyse, les données contextuelles, et la valeur de probabilité représentant le dénouement de la session de communication afin de comparer une pluralité de sessions de communication et une sortie d'une distribution de probabilité d'un dénouement d'une session de communication ultérieure.

12. Dispositif de génération d'instruction selon l'une quelconque des revendications 1 à 11, dans lequel l'instruction générée ordonne à un participant de la session de communication ou à un terminal utilisateur qui est utilisé dans la session de communication de mettre fin à la session de communication lorsque la valeur de probabilité générée dépassant le seuil représente une violation de sécurité.

13. Système pour générer, en temps réel, une instruction concernant une session de communication en utilisant des données d'informations sensibles anonymisées, le système comprenant :
un module de traitement d'informations sensibles configuré pour :
- recevoir des données audio et/ou des données textuelles reflétant le contenu de la session de communication,
- extraire des données d'informations sensibles des données audio et/ou des données textuelles,
- générer les données d'informations sensibles anonymisées par anonymisation et classification des données d'informations sensibles, et
- délivrer en sortie les données d'informations sensibles anonymisées ; et
le dispositif de génération d'instruction selon l'une quelconque des revendications 1 à 12.

14. Système selon la revendication 13, dans lequel le module de traitement d'informations sensibles comprend une unité de reconnaissance automatique de la parole, ASR, configurée pour convertir les données audio en données textuelles reflétant le contenu de la session de communication.

15. Système selon la revendication 13 ou la revendication 14,
dans lequel le module de traitement d'informations sensibles comprend une unité de classification de texte pour extraire les données d'informations sensibles et générer les données d'informations sensibles anonymisées, dans lequel l'unité de classification de texte est configurée pour identifier et extraire une chaîne spécifique de caractères dans les données textuelles reflétant le contenu de la session de communication en tant que données d'informations sensibles, pour classifier les informations personnelles dans les données d'informations sensibles par détermination du type d'informations personnelles, et pour générer les données d'informations sensibles anonymisées par suppression, en vue d'une anonymisation, des informations personnelles des données d'informations sensibles et ajout, en vue d'une classification, d'une étiquette représentant la classification des informations personnelles,
dans lequel l'unité de traitement d'informations sensibles comprend en outre facultativement une unité de formatage de données textuelles configurée pour formater les données textuelles en un format de données textuelles requis par l'unité de classification de texte, dans lequel l'unité de classification textuelle utilise les données textuelles formatées pour extraire les données d'informations sensibles et générer les données d'informations sensibles anonymisées.

16. Système selon l'une quelconque des revendications 13 à 15, comprenant en outre un terminal utilisateur configuré pour fournir une interface utilisateur, dans lequel le terminal utilisateur est configuré pour recevoir l'instruction en provenance du dispositif de génération d'instruction et pour délivrer en sortie l'instruction à un utilisateur,
dans lequel le module d'analyse d'informations sensibles est facultativement configuré pour transmettre le résultat d'analyse au terminal utilisateur, et
le terminal utilisateur est en outre facultativement configuré pour afficher le résultat d'analyse.

17. Système selon la revendication 16, dans lequel
en réponse à l'instruction reçue, le terminal utilisateur est configuré pour signaler la session de communication et est en outre configuré pour :
stocker et transmettre la session de communication signalée à une base de données de formation ; ou
stocker, dupliquer et chiffrer la session de communication signalée, et transmettre la session de communication chiffrée à un autre terminal utilisateur.

18. Procédé de génération d'instruction pour générer, en temps réel, une instruction concernant une session de communication en utilisant des données d'informations sensibles anonymisées, le procédé de génération d'instruction comprenant les étapes de :
- réception des données d'informations sensibles anonymisées ;
- réception de données de communication, les données de communication comprenant des métadonnées relatives à la session de communication et/ou des données textuelles reflétant le contenu de la session de communication ;
- génération d'un résultat d'analyse par analyse des données d'informations sensibles anonymisées par rapport aux données de communication ;
- réception de données contextuelles, les données contextuelles fournissant un contexte à la session de communication,
- génération d'une valeur de probabilité représentant un dénouement de la session de communication en utilisant un modèle d'apprentissage automatique entrainé, le résultat d'analyse et les données contextuelles étant des entrées du modèle d'apprentissage automatique entrainé ;
- génération de l'instruction lorsque la valeur de probabilité générée dépasse un seuil ; et
- sortie de l'instruction générée pour influer sur le dénouement de la session de communication ;
dans lequel le procédé de génération d'instruction comprend en outre les étapes de :
- comparaison des données d'informations sensibles anonymisées avec les données de communication ; et
- détermination d'un moment où sont apparues les données d'informations sensibles anonymisées au cours de la session de communication en utilisant des horodatages inclus dans les données de communication, comptage d'une quantité totale de données d'informations sensibles anonymisées trouvées dans les données de communication, comptage d'une quantité des données d'informations sensibles anonymisées pour une classification particulière de données d'informations sensibles, les données d'informations sensibles anonymisées étant trouvées dans les données de communication, et/ou détermination d'une durée des données d'informations sensibles anonymisées en utilisant les horodatages inclus dans les données de communication.

19. Procédé mis en oeuvre dans un système pour générer, en temps réel, une instruction concernant une session de communication en utilisant des données d'informations sensibles anonymisées, le procédé comprenant les étapes de :
- réception de données audio et/ou de données textuelles reflétant le contenu de la session de communication ;
- extraction de données d'informations sensibles des données audio et/ou des données textuelles ;
- génération des données d'informations sensibles anonymisées par anonymisation et classification des données d'informations sensibles ; et
- sortie des données d'informations sensibles anonymisées ;
dans lequel le procédé comprend en outre les étapes selon la revendication 18.
